# EUROPEAN PATENT SPECIFICATION

(11) **EP 4 477 475 B1**
(45) Date of publication and mention of the grant of the patent: **10.09.2025**
(21) Application number: 24182136.2
(22) Date of filing: 14.06.2024
(51) Int. Cl.: B60R 16/03, B60R 16/033, H01R 9/22, H01R 11/12, H02K 3/14, H02K 3/32, H02K 3/52, H02K 5/22, H01R 4/34

(54) **TERMINAL STRUCTURE OF ELECTRIC APPARATUS**
ANSCHLUSSSTRUKTUR FÜR ELEKTRISCHE VORRICHTUNG
STRUCTURE DE BORNE D'APPAREIL ÉLECTRIQUE

(30) Priority: 16.06.2023 JP 2023099461; 26.04.2024 JP 2024072590
(43) Date of publication of application: 18.12.2024
(73) Proprietor: MAZDA MOTOR CORPORATION, Hiroshima 730-8670 (JP)
(72) Inventor: SUGIMOTO, Manabu, Hiroshima, 730-8670 (JP)
(74) Representative: Müller-Boré & Partner Patentanwälte PartG mbB

(56) References cited:
- US-A1- 2017 100 998
- US-A1- 2022 077 606
- US-A1- 2022 140 685

## Description

### TECHNICAL FIELD

The present invention relates to a terminal structure of an electric apparatus.

### BACKGROUND

In recent years, vehicles provided with a motor as a drive source for propelling the vehicles have increased. Such vehicles carry a high-voltage battery for supplying electric power to the motor. In addition, the vehicles also carry a power converter for converting direct current (DC) power supplied from the battery into alternating current (AC) power.

The power converter, the motor, and the battery form an electric power supply passage therebetween by connecting wiring extending from the motor and the battery to terminals of the power converter. JP2022-519384A and JP2021-052499A disclose connecting structures of the power converter and the motor.

JP2022-519384A discloses a configuration in which the power converter is placed on a motor housing, and the wiring of the power converter is connected to the wiring of the motor via a connector assembly. This connector assembly has three terminals disposed along a circumferential surface of the motor housing.

On the other hand, JP2021-052499A discloses a configuration in which the power converter is also accommodated in a housing which accommodates a stator and a rotor of the motor. This housing has a large opening on the side where the power converter is accommodated. This large opening is used for a tool insertion when accommodating the power converter in the housing, and connecting the wiring of the power converter to the terminals of the motor. This large opening is closed by a cover.

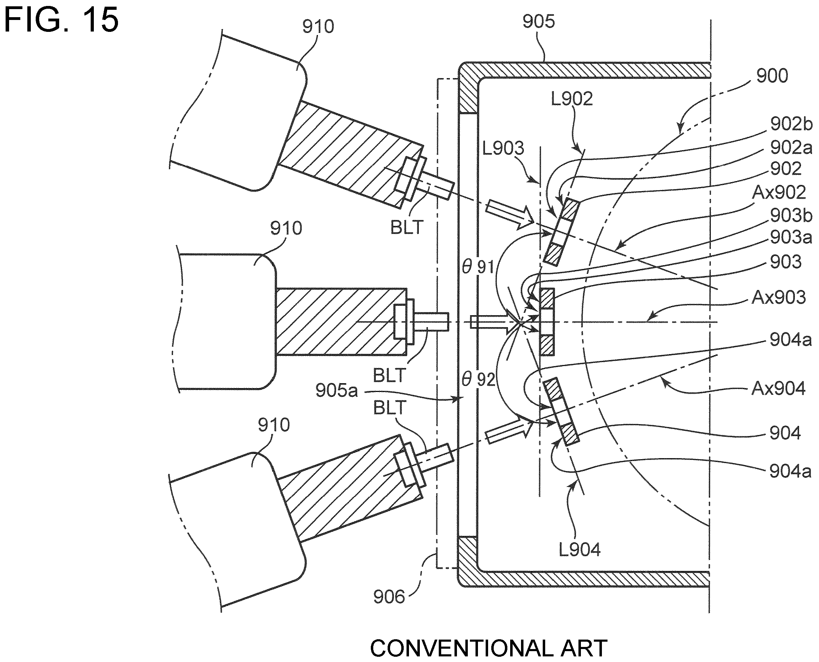

Meanwhile, although JP2022-519384A does not explicitly illustrate the wiring extending from the power converter and the motor, and a case and a lid which cover the connector assembly, they are typically covered by the case in order to avoid a situation in which an external object contacts the wiring, etc. In this case, as illustrated in Fig. 15, since terminals 902-904 of the connector assembly are disposed along an outer circumferential surface of a motor housing 900, a large opening 905a and a large lid 906 need to be provided to a case 905 covering the terminals 902-904. That is, when connecting the wiring of the motor to the terminals 902-904, it is possible to fasten therebetween with bolts BLT using a tool 910. In this case, since the terminals 902-904 are disposed along the circumferential surface of the motor housing 900, when drawing virtual planes L902, L903, and L904 along connecting parts 902a, 903a, and 904a, angles θ91 and θ92 formed between adjacent virtual planes L902, L903, and L904 become larger than 180°. For this reason, center lines Ax902, Ax903, and Ax904 which intersect perpendicularly to the virtual planes L902, L903, and L904 and pass through the centers of fastening holes 902b, 903b, and 904b spread radially toward the opening 905a from the inside of the case 905. That is why the large opening 905a is necessary when connecting the wiring of the motor to the terminals 902-904.

Since the large opening 905a is necessary for inserting the tool as described above, the case 905 and the lid 906 are also necessary to be large in the size. This obstructs a potential demand of making occupancy spaces of various electric apparatuses including the power converter smaller.

US 2022/140685 A1 discloses a vehicle drive device comprising a combustion engine, an electrical motor and and a power converter. The power converter comprises an inverter bus bar module comprising a plurality of bus bar terminals having each a flat connecting surface and a through-hole into which a bolt for the electrical connection is inserted, and the bus bar module is inside a case. The bus bar terminals connecting surfaces are parallel.

US 2017/100998 A1 relates to a rotating electric machine having bus bar terminals with insertion holes, the terminals not being placed in parallel planes.

Note that although in the above explanation the power converter is one example of the electric apparatus in the vehicle, similar problems may happen in other electric apparatuses.

### SUMMARY

The present invention is made in view of solving the above problem, and one purpose thereof is to provide a terminal structure of an electric apparatus, provided with a plurality of terminals for electric connection with an external apparatus inside a downsized case.

The present invention is defined in claim 1. Particularly, a terminal structure of an electric apparatus according to one aspect includes a plurality of terminals at least including a first terminal and a second terminal adjacent to the first terminal, each of the terminals having a connecting part that is electrically connected to an external apparatus and is arranged to extend from a predetermined reference plane to a direction orthogonal to the reference plane. The terminal structure further includes a case accommodating the plurality of terminals, and having a tool insertion opening into which a tool for electric connection of the plurality of terminals is to be inserted in a part of an outer wall.

In the terminal structure of the electric apparatus according to this aspect, the connecting part of each of the plurality of terminals has a flat connecting surface and a through-hole into which a bolt for the electrical connection is inserted. Assume there are the following first and second normal lines. The first normal line is a virtual line that passes through a radial center of the through-hole in the connecting part of the first terminal and extends in a direction normal to the connecting surface in the connecting part of the first terminal. The second normal line is a virtual line that passes through a radial center of the through-hole in the connecting part of the second terminal and extends in a direction normal to the connecting surface in the connecting part of the second terminal.

In the above case, when viewed from the direction orthogonal to the reference plane, the connecting part of the first terminal and the connecting part of the second terminal are arranged such that a distance between a point where the first normal line passes through the tool insertion opening and a point where the second normal line passes through the tool insertion opening is shorter than a distance between an intersection of the connecting surface and the first normal line in the connecting part of the first terminal and an intersection of the connecting surface and the second normal line in the connecting part of the second terminal.

In the terminal structure of the electric apparatus according to this aspect, the connecting part of the first terminal and the connecting part of the second terminal are arranged such that the distance between the points where the first and second normal lines respectively pass through the tool insertion opening is shorter than the distance between the intersection of the respective connecting surfaces of the first and second terminals and the corresponding respective normal lines (the first normal line and the second normal line). As a result, in the terminal structure of the electric apparatus according to this aspect, the size of the tool insertion opening in the case can be downsized compared to the situation where radial diffusion occurs outward, as shown in Fig. 15. This reduction allows the size of the case to be reduced.

Particularly, in the terminal structure of the electric apparatus according to this aspect, assume there are the following first and second virtual planes. The first virtual plane is a virtual plane along the connecting surface of the connecting part of the first terminal. The second virtual plane is a virtual plane along the connecting surface of the connecting part of the second terminal. In this case, the shortest distance from the intersection of the first virtual plane and the first normal line to a part of the outer wall is defined as the first distance, and the shortest distance from the intersection of the second virtual plane and the second normal line to the part of the outer wall is defined as the second distance.

In the above case, the reference plane may be defined in a direction orthogonal to an intersection of the first virtual plane and the second virtual plane where the first virtual plane and the second virtual plane intersect. Further, the connecting part of the first terminal and the connecting part of the second terminal may be disposed so that the first virtual plane and the second virtual plane intersect with each other at an obtuse angle, and when viewed from the direction orthogonal to the reference plane, the first normal line and the second normal line pass through the tool insertion opening, and the first normal line and the second normal line intersect with each other at an opposite side of the disposed positions of the connecting parts of the first terminal and the second terminal with respect to a position that is half of a distance of the shorter one of the first distance and the second distance.

Further particularly, in the terminal structure of the electric apparatus according to this aspect, the connecting part of the first terminal (first connecting part) and the connecting part of the second terminal (second connecting part) are disposed so that the virtual planes (the first virtual plane, the second virtual plane) along the respective connecting surfaces intersect with each other at the obtuse angle. Therefore, as compared with a case where the connecting parts of all the terminals are disposed so that the virtual planes are parallel to each other, a space which the connecting parts of the plurality of terminals occupy can be reduced by an amount of inclination of at least one of the first and second connecting parts. Therefore, the terminal structure of the electric apparatus according to this aspect is even more effective in reducing the size of the case which accommodates the plurality of terminals.

Further particularly, in the terminal structure of the electric apparatus according to this aspect, when viewed from a direction orthogonal to the reference plane, the first connecting part and the second connecting part are disposed so that the normal lines intersect with each other at the opposite side of the disposed positions of the connecting parts of the first terminal and the second terminal with respect to the half position described above. Therefore, as compared with a case where normal lines of all the connecting parts of the plurality of terminals are parallel to each other, and a case where the normal lines spread radially outwardly as illustrated in Fig. 15, the size of the tool insertion opening of the case can be reduced, and the size of the case can also be downsized.

In the terminal structure of the electric apparatus according to this aspect, the connecting part of the first terminal and the connecting part of the second terminal may be disposed so that the first normal line and the second normal line intersect with each other outside the case, when viewed from the direction orthogonal to the reference plane.

In the terminal structure of the electric apparatus according to this aspect, since the intersection between the first normal line and the second line is located outside the case (outward of the tool insertion opening), when viewed from the direction orthogonal to the reference plane, the size of the tool insertion opening of the case can be reduced while reducing the distance between the first and second terminals and the tool insertion opening, as compared with a case where the intersection is located inside the case.

In the terminal structure of the electric apparatus according to this aspect, the plurality of terminals may be disposed so that gaps between adjacent connecting parts are more than a predetermined distance, particularly an insulation distance.

In the terminal structure of the electric apparatus according to this aspect, since the gaps between the adjacent connecting parts are set to more than the insulation distance, it is not necessary to insert insulators, such as ribs, into the gaps between the connecting parts. For this reason, even if the first virtual plane and the second virtual plane intersect with each other at the obtuse angle in a dented manner, the tool can be inserted easily to the connecting parts, and a rise in the manufacturing cost can be suppressed.

In the terminal structure of the electric apparatus according to this aspect, in a direction orthogonal to the direction in which the first distance and the second distance above are defined in the reference plane, the tool insertion opening may be formed so that an opening length of the tool insertion opening is shorter than a layout length of the connecting parts of the plurality of terminals.

In the terminal structure of the electric apparatus according to this aspect, since the opening length of the tool insertion opening of the case is set shorter than the layout length of the connecting parts of the plurality of terminals in the same direction (direction orthogonal to the direction in which the first and second distances above are defined), the tool insertion opening for inserting the tool in a narrow area can be provided. Therefore, it is advantageous to reduce the external size of the electric apparatus.

In the terminal structure of the electric apparatus according to this aspect, the electric apparatus may be a power converter configured to convert direct current (DC) power into alternating current (AC) power. The external apparatus may be a three-phase AC motor configured to rotate in response to supply of three-phase AC power. The plurality of terminals may be disposed in an electric power supply passage to the three-phase AC motor, and may be comprised of the first terminal, the second terminal, and a third terminal of which a connecting part is disposed adjacent to the connecting part of the second terminal. Further particularly, assume there are the following third virtual plane and third normal line. The third virtual plane is a virtual plane along a connecting surface of the connecting part of the third terminal. The third normal line is a virtual line that passes through a radial center of the through-hole in the connecting part of the third terminal and extends in a direction normal to the connecting surface in the connecting part of the third terminal. In this case, the shortest distance from a point where the third virtual plane and the third normal line intersect to the part of the outer wall is a third distance.

In the above case, the connecting part of the third terminal may be disposed so that the second virtual plane and the third virtual plane intersect with each other at an obtuse angle, and when viewed from the direction orthogonal to the reference plane, the second normal line and the third normal line pass through the tool insertion opening. Further, the connecting part of the third terminal may be disposed so that the second normal line and the third normal line intersect with each other at an opposite side of the disposed positions of the connecting parts of the second terminal and the third terminal with respect to a position that is half of a distance of the shorter one of the second distance and the third distance.

In the terminal structure of the electric apparatus according to this aspect, the power converter is applied as one example of the electric apparatus, and the three-phase AC motor is applied as one example of the external apparatus. The connecting part of the third terminal is also disposed with respect to the second connecting part as described above. Therefore, also in the case where the three connecting parts are accommodated in the case, the external size of the case can be reduced.

In the terminal structure of the electric apparatus according to this aspect, the connecting part of the second terminal and the connecting part of the third terminal may be disposed so that the second normal line and the third normal line intersect with each other outside the case, when viewed from the direction orthogonal to the reference plane.

In the terminal structure of the electric apparatus according to this aspect, since the intersection between the second normal line and the third line is located outside the case (outward of the tool insertion opening), when viewed from the direction orthogonal to the reference plane, the size of the tool insertion opening can be reduced while reducing the distance between the third terminal and the tool insertion opening, as compared with a case where the intersection is located inside the case.

Further particularly, in the terminal structure of the electric apparatus according to this aspect, when viewed from the direction orthogonal to the reference plane, a direction connecting a point where the first normal line passes through the tool insertion opening and a point where the second normal line passes through the tool insertion opening is defined as a first direction, and a direction orthogonal to the first direction on the reference plane is defined as a second direction. Further particularly, assume there are the following first and second imaginary lines. The first imaginary line is an imaginary line that passes through a radial center of the through-hole in the connecting part of the first terminal and extends in the second direction. The second imaginary line is an imaginary line that passes through a radial center of the through-hole in the connecting part of the second terminal and extends in the second direction.

In the above case, the point where the first normal line passes through the tool insertion opening and the point where the second normal line passes through the tool insertion opening may be positioned in an area between the first imaginary line and the second imaginary line in the first direction.

Further particularly, in the terminal structure of the electric apparatus according to this aspect, each connecting part of the first terminal and the second terminal is arranged so that the points where the first normal line and the second normal line each pass through the tool insertion opening are located in the area between the first and second imaginary lines in the first direction. Therefore, as compared with a case where normal lines of all the connecting parts of the plurality of terminals are parallel to each other, and a case where the normal lines spread radially outwardly as illustrated in Fig. 15, the size of the tool insertion opening of the case can be reduced, and the size of the case can also be downsized.

Further particularly, in the terminal structure of the electric apparatus according to this aspect, the motor may be a motor for propelling a vehicle, the motor mounted in a powertrain room (or a powertrain compartment) of the vehicle and having a motor housing serving as an outer cell. A transmission having an axle housing serving as an outer cell may be mounted adjacent to the motor in the powertrain room. The case may be disposed on at least one of the motor housing and the axle housing so that the tool insertion opening is oriented to an input side of an impact load expected in the vehicle. An end of the case on the input side may be flush in the surface with the motor housing or the axle housing, or may be located on an opposite side from the input side.

In the terminal structure of the electric apparatus according to this aspect, the power converter as the electric apparatus is carried in the powertrain room of the vehicle, and the power converter is disposed so that the tool insertion opening is oriented to the input direction of the expected load to the vehicle. Further, the case of the power converter is disposed so that the end of the case in the input direction becomes flush with or rearward of the motor housing or the axle housing.

Therefore, in the terminal structure of the electric apparatus according to this aspect, if an impact load is inputted to the vehicle, the load will not be intensively inputted into the power converter, thereby securing high safety.

### BRIEF DESCRIPTION OF DRAWINGS

Fig. 1 is a schematic diagram illustrating a configuration of a vehicle to which a terminal structure of an electric apparatus according to a first embodiment of the present invention is applied.
Fig. 2 is a front view illustrating a layout of a power converter.
Fig. 3 is a side view illustrating the layout of the power converter.
Fig. 4 is a plan view illustrating an appeared configuration of the power converter.
Fig. 5 is a perspective view illustrating an internal configuration of an AC connector part.
Fig. 6 is a developed perspective view illustrating the internal configuration of the AC connector part.
Fig. 7 is a cross-sectional view showing VII-VII line cross-section of Figs. 5 and 6, and a cross-sectional view illustrating a layout of a connecting part of each busbar in an AC busbar.
Fig. 8 is a perspective view illustrating an internal configuration of an AC connector part in a terminal structure of an electric apparatus according to a second embodiment of the present invention.
Fig. 9 is a cross-sectional view showing IX-IX line cross-section of Fig. 8, and a cross-sectional view illustrating a layout of a connecting part of each busbar.
Fig. 10 is a perspective view illustrating an internal configuration of an AC connector part in a terminal structure of an electric apparatus according to a third embodiment of the present invention.
Fig. 11 is a cross-sectional view showing XI-XI line cross-section of Fig. 10, and a cross-sectional view illustrating a layout of a connecting part of each busbar.
Fig. 12 is a schematic diagram illustrating a layout of a connecting part according to a first embodiment of the present invention.
Fig. 13 is a schematic diagram illustrating a layout of a connecting part according to a second embodiment of the present invention.
Fig. 14 is a cross-sectional view illustrating a layout of a connecting part of each busbar in an AC connector part according to a comparative example.
Fig. 15 is a cross-sectional view illustrating a layout of a connecting part of each busbar in an electric apparatus according to a conventional technology.

### DETAILED DESCRIPTION OF THE INVENTION

Hereinafter, several embodiments of the present invention will be described with reference to the accompanying drawings. Note that the following embodiments illustrate the present invention exemplarily, and therefore, the present invention is not limited in any ways by the embodiments, except for its essential configuration.

### [First Embodiment]

### 1. Configuration of Vehicle V

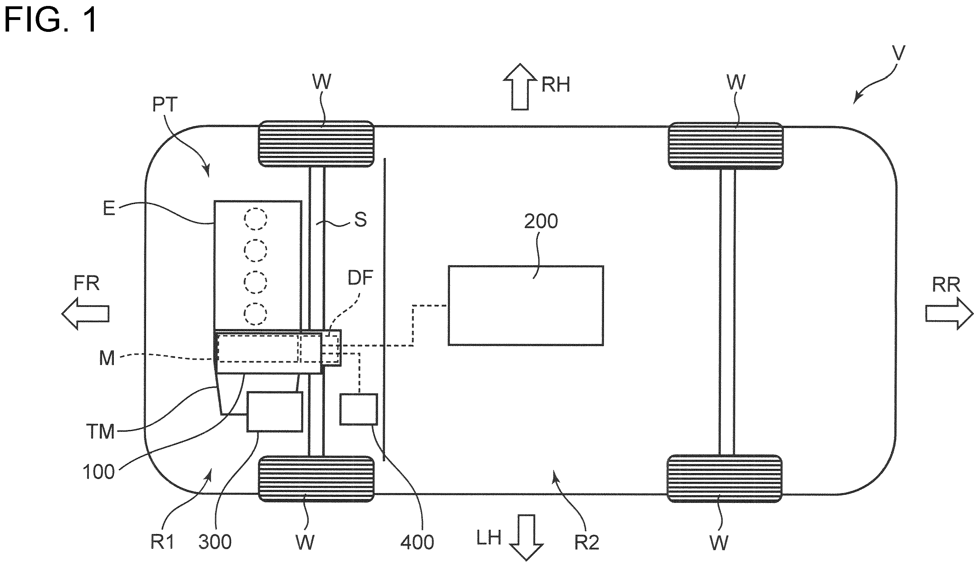

A configuration of a vehicle V to which a terminal structure of an electric apparatus according to a first embodiment of the present invention is applied is described with reference to Fig. 1. Note that, below, a front-and-rear direction of the vehicle V is simply described as the "front-and-rear direction," a left-and-right direction of the vehicle V (vehicle width direction) is simply described as the "left-and-right direction," and an up-and-down direction of the vehicle V is simply described as the "up-and-down direction."

As illustrated in Fig. 1, the vehicle V carries a powertrain PT, a power converter 100, a high-voltage battery (or a first battery) 200, and a low-voltage battery (or a second battery) 300.

The vehicle V may be a so-called "Hybrid Electric Vehicle (HEV)," which carries an engine E and a motor M which function as a drive source for propelling (i.e., a drive source of the vehicle V (wheels W)). The powertrain PT may include the engine E and the motor M. The powertrain PT may also include a transmission TM and a differential gear DF.

The motor M may be a three-phase alternating current (AC) motor which rotates in response to supply of three-phase AC power, and includes an output shaft, a rotor having permanent magnets arranged around the output shaft, and a stator which is disposed radially outward of the rotor and where coils are wound around a plurality of teeth. The plurality of coils may be comprised of a U-phase coil, and a V-phase coil, and a W-phase coil, and different currents are supplied to the coils.

The transmission TM may be connected with the motor M, and may reduce the speed of rotation (changes the gear stage) inputted from the motor M and output the reduced rotation. The differential gear DF may transmit the rotation outputted from the transmission TM to the wheels W via a drive shaft S.

In this embodiment, the vehicle V may be a parallel-type hybrid electric vehicle as one example, which is propelled by the motor M, by the engine E, or by both the motor M and the engine E. Note that the vehicle V may be capable of performing regenerative deceleration so that the motor M generates electric power by a transferring force from the wheels W when the vehicle V decelerates.

The high-voltage battery 200 may be a battery which supplies and receives electric power to/from the motor M. When the motor M is used as the propelling drive source, the high-voltage battery 200 supplies electric power to the motor M. On the other hand, when the motor M is used as a generator when the vehicle V decelerates, the high-voltage battery 200 stores electric power generated by the motor M.

The power converter 100 may convert direct current (DC) power from the high-voltage battery 200 into AC power, and then supply it to the motor M. In detail, the power converter 100 converts DC power into three-phase AC power.

Further, when the motor M is used as a generator when the vehicle V decelerates, the power converter 100 may convert the AC power generated by the motor M into DC power, and then supplies it to the high-voltage battery 200.

The low-voltage battery 300 may be a battery for supplying electric power to electrical components provided to each part of the vehicle V The low-voltage battery 300 may be a battery which is lower in the nominal voltage than the high-voltage battery 200.

For example, the high-voltage battery 200 is a lithium-ion battery or a nickel-hydrogen battery of which the nominal voltage is 24V or higher, and the low-voltage battery 300 is a lead battery or a lithium-ion battery of which the nominal voltage is 12V or 24V.

In this embodiment, the powertrain PT, the power converter 100, and the low-voltage battery 300 are accommodated in a powertrain room (or a compartment) R1 formed in a front part of the vehicle V The high-voltage battery 200 may be mounted under a floor of a cabin R2 formed behind the powertrain room R1.

Note that a PCM (Powertrain Control Module) 400 which is a controller for totally controlling the powertrain PT including the motor M and the engine E may also be mounted on the vehicle V

### 2. Layout of Power Converter 100

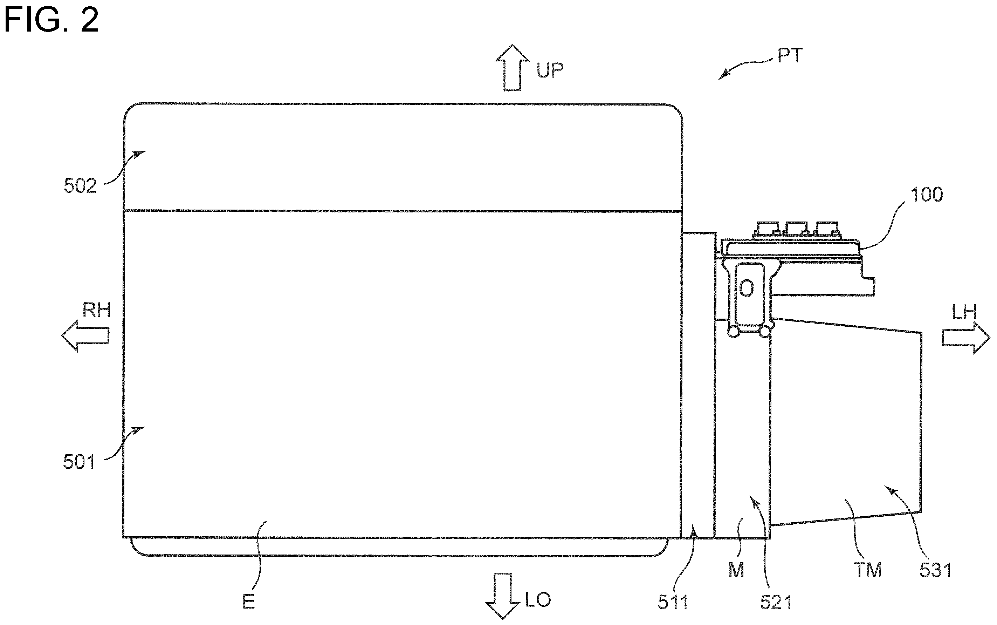

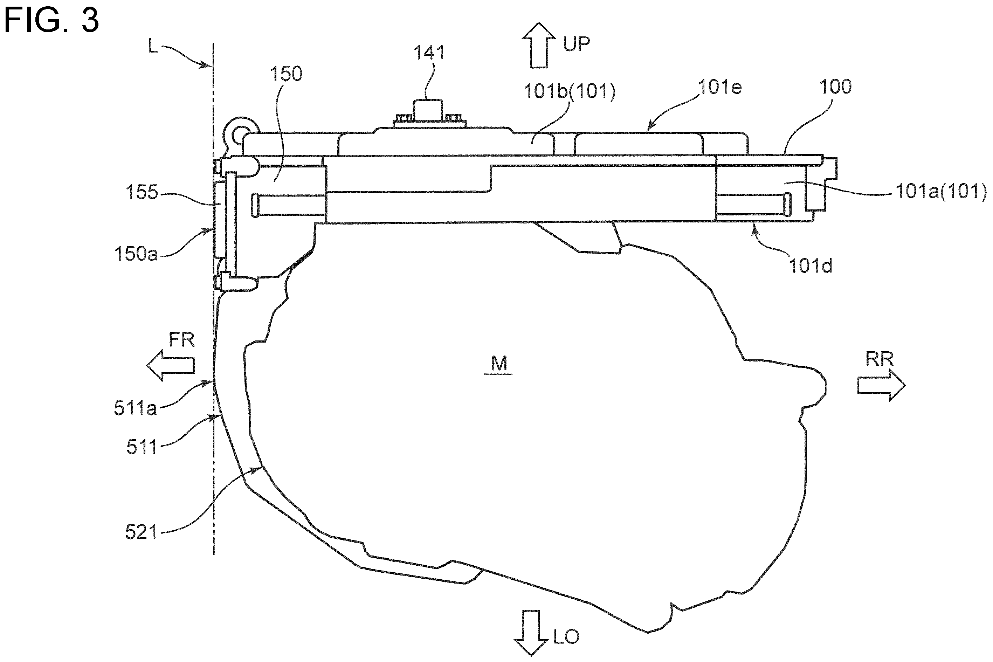

The layout of the power converter 100 in the powertrain room R1 is described with reference to Figs. 2 and 3. Fig. 2 is a front view of the power converter 100 and its peripheral equipment, when viewed from the front side of the vehicle V Fig. 3 is a side view of the power converter 100 and the motor M, when viewed from the left side of the vehicle V.

As illustrated in Fig. 2, in the powertrain room R1, the engine E, the motor M, and the transmission TM may be disposed in this order from the right side. The engine E may include an engine lower part 501 and an engine upper part 502 disposed above the engine lower part 501. The motor M may be disposed adjacent to the engine lower part 501 of the engine E on the left side.

The motor M may include a first motor housing 511 and a second motor housing 521 as outer cells. The first motor housing 511 is joined to a left-side external surface of the engine lower part 501, and the second motor housing 521 is connected to the left side of the first motor housing 511 without a gap.

The transmission TM may have an axle housing 531 as an outer cell. The axle housing 531 has a frustum shape of which the cross-sectional size is reduced gradually from the right side toward the left side.

The power converter 100 may be disposed above the second motor housing 521 and the axle housing 531, in the left-and-right direction of the vehicle V As illustrated in Fig. 3, when the motor M and the power converter 100 are viewed from the left, a lower surface 101d of a case 101 of the power converter 100 partially contacts the second motor housing 521, and the remainder is separated upwardly from the second motor housing 521.

The power converter 100 may have an AC connector part 150 in a front part of the vehicle V. Busbars (terminals) for connection with the motor M are built inside the AC connector part 150, and the lower surface 101d of the case 101 is located lower than other parts of the power converter 100. A lid 155 is attached to the front side of the case 101. The lid 155 closes an opening for tool insertion formed in the front part of the case 101. The tool insertion opening will be described later.

When assuming or froming a virtual plane L which contacts a front end part 511a of the first motor housing 511 of the motor M, and extends in the up-and-down direction, a front end part 150a (a front surface of the lid 155) of the AC connector part 150 of the power converter 100 is flush with the virtual plane L, or is located rearward of the virtual plane L.

The case 101 may include a case body 101a which opens upwardly, and a case lid 101b which closes the opening of the case body 101a. A PCM connector 141 may protrude upwardly from an upper surface 101e of the case 101. The PCM 400 (see Fig. 1) may be connected to the power converter 100 via the PCM connector 141.

### 3. Configuration of Power Converter 100

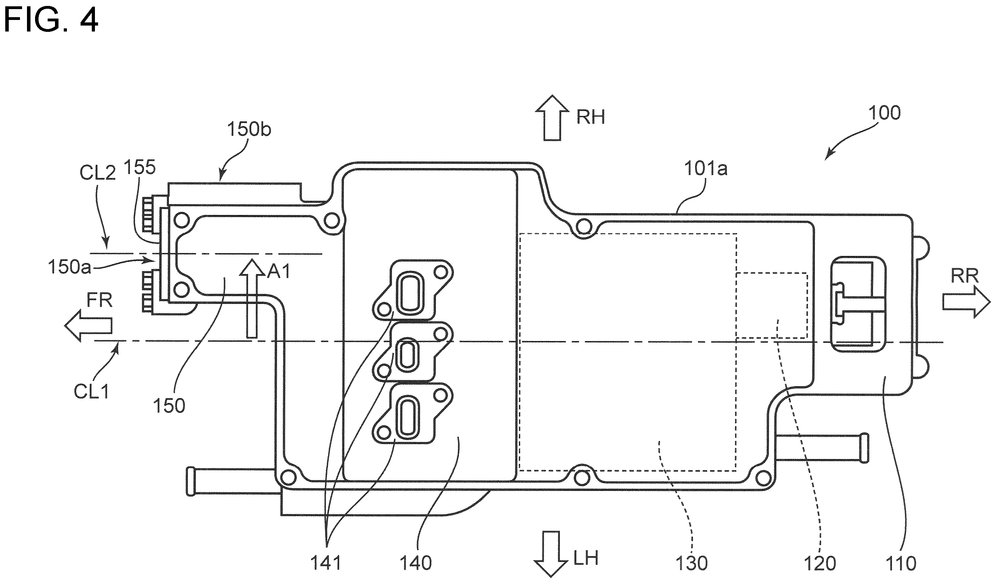

A configuration of the power converter 100 is described with reference to Fig. 4. Fig. 4 is a plan view of the power converter 100, viewed from above.

As illustrated in Fig. 4, the power converter 100 may include a DC connector part 110, a noise removing part 120, a smoothing part 130, a power module part 140, and the AC connector part 150, which are accommodated inside the case body 101a of the case 101. The DC connector part 110, the noise removing part 120, the smoothing part 130, the power module part 140, and the AC connector part 150 may be disposed in this order from the rear side of the vehicle V.

The AC connector part 150 may be disposed so that a center line CL2 in the left-and-right direction is offset to the right (arrow A1) from a center line CL1 of other parts of the power converter 100. That is, as illustrated in Fig. 2, the center line CL2 of the AC connector part 150 is offset to the right so that a right-side external surface 150b contacts the first motor housing 511 of the motor M without a gap.

The DC connector part 110 may have a plurality of terminals used for connection with the high-voltage battery 200. The noise removing part 120 is a functional part for preventing leaking of noise of a high frequency component from the power converter 100, and, for example, it includes a ferrite core. The noise removing part 120 may be inserted in an electric power passage between the DC connector part 110 and the smoothing part 130.

The smoothing part 130 is a functional part which smooths DC power, and it includes a smoothing capacitor (e.g., a film capacitor). The smoothing part 130 may be inserted in an electric power passage between the noise removing part 120 and the power module part 140.

The power module part 140 may include a module body having a plurality of IGBTs (Insulated Gate Bipolar Transistors), and a control circuit board which is connected with the module body and electrically controls the IGBTs, etc. of the module body. The PCM connector 141 is connected to the control circuit board. A controller formed in the control circuit board controls circuitry including the IGBTs of the module body in response to a command from the PCM 400 to change a conversion amount of DC power and AC power.

Particularly, in the power module part 140, the IGBTs of the module body are power semiconductors corresponding to U-phase, V-phase, and W-phase.

Although in this embodiment the module body has the plurality of IGBTs, the power module is not limited to the IGBTs. For example, known power modules, such as MOSFETs (Metal Oxide Semiconductor Field Effect Transistors), may also be adopted.

The module body of the power module part 140 may be inserted in an electric power passage between the smoothing part 130 and the AC connector part 150.

The AC connector part 150 may have wiring (busbars) used for electrically connecting with the motor M. The power converter 100 sends out AC power toward the motor M via the AC connector part 150. Further, when the motor M functions as the generator when the vehicle V decelerates, the power converter 100 may accept AC power from the motor M via the AC connector part 150.

When supplying AC power for propelling the vehicle to the motor M, DC power outputted from the high-voltage battery 200 may be inputted into the noise removing part 120 via the DC connector part 110, and noise removal of the high frequency component may be performed by the noise removing part 120. The DC power which passed the noise removing part 120 may be smoothed by the smoothing part 130, and may be sent out to the power module part 140.

The power module part 140 may convert the DC power into three-phase AC power according to a command from the PCM 400. Then, the converted three-phase AC power is sent out to the motor M via the AC connector part 150.

On the contrary, when the motor M functions as the generator when the vehicle V decelerates, the three-phase AC power generated by the motor M may be inputted into the power module part 140 via the AC connector part 150. Then, the inputted AC power may be converted into DC power by the power module part 140. The converted DC power may be sent out to the high-voltage battery 200 via the smoothing part 130, the noise removing part 120, and the DC connector part 110. Therefore, the high-voltage battery 200 is charged.

Note that a DC-DC converter may be inserted in an electric power passage between the power converter 100 and the high-voltage battery 200.

### 4. Internal Configuration of AC Connector Part 150

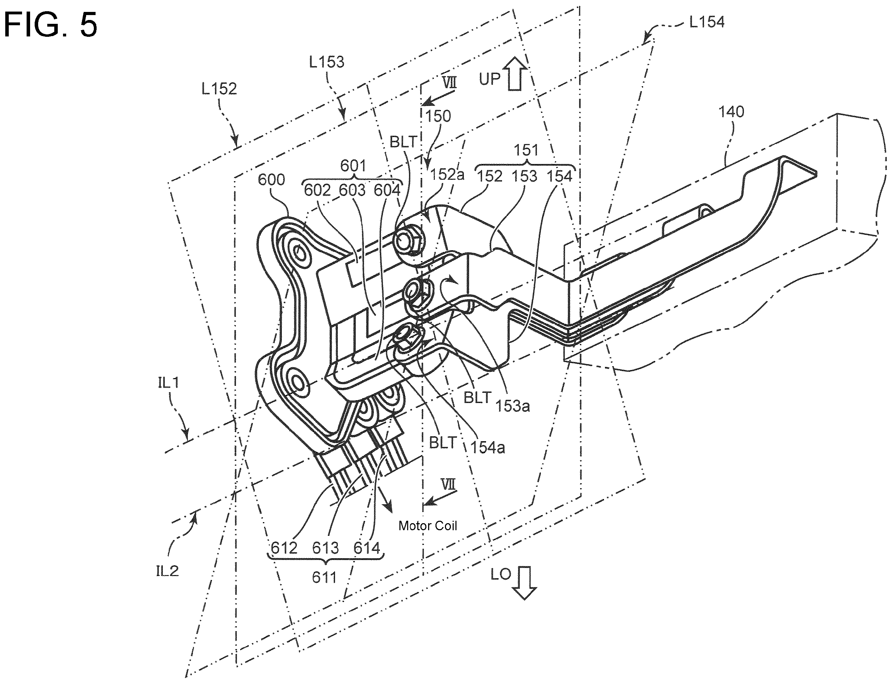

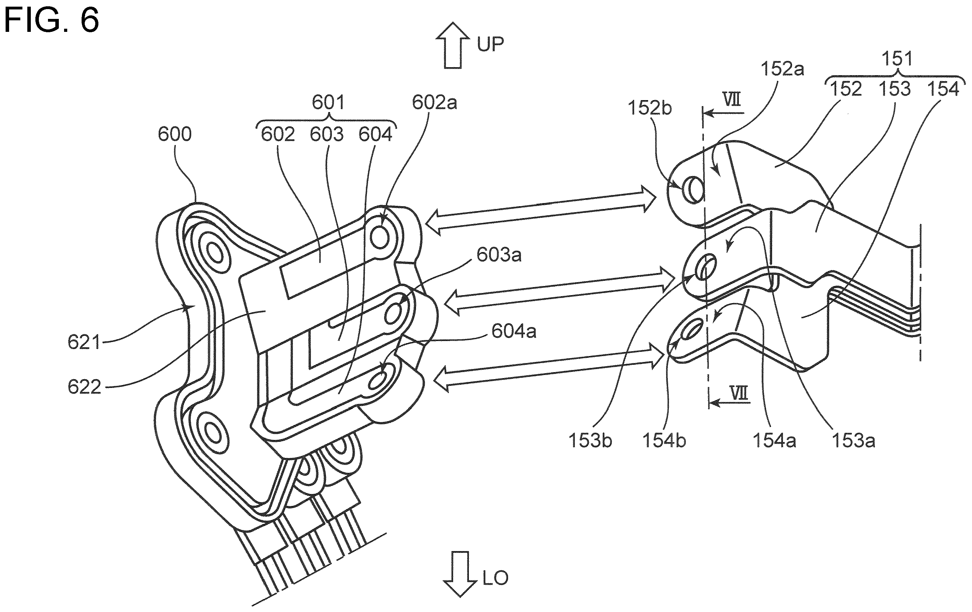

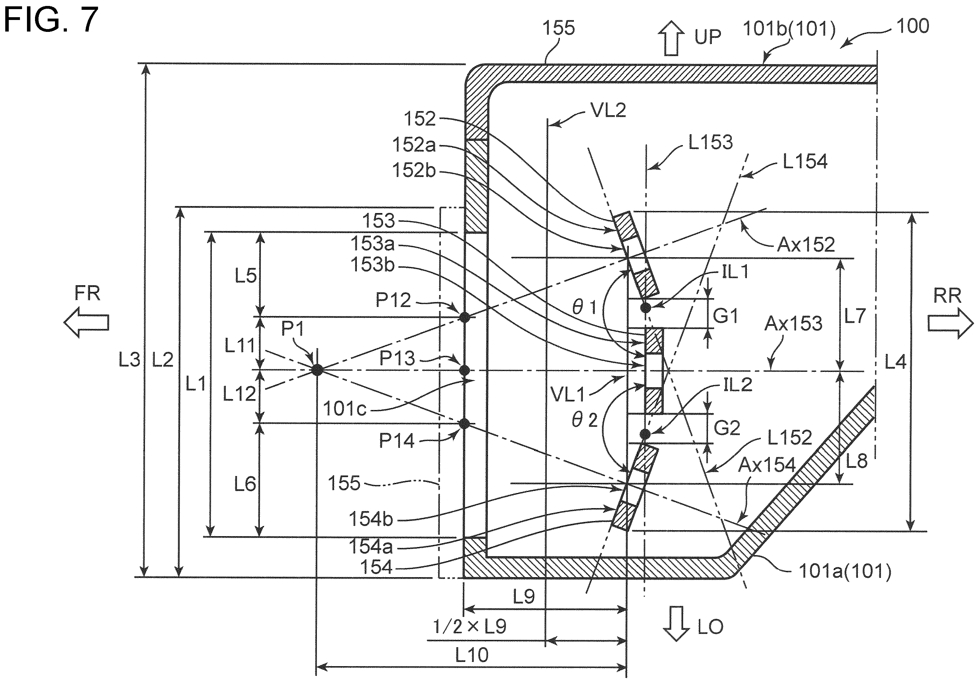

An internal configuration of the AC connector part 150 is described with reference to Figs. 5 to 7. Fig. 5 is a perspective view illustrating the internal configuration of the AC connector part 150, and Fig. 6 is a developed perspective view thereof. Further, Fig. 7 is a schematic cross-sectional view illustrating a layout of connecting parts 152a, 153a, and 154a of busbars 152-154, and the case 101.

As illustrated in Figs. 5 and 6, the AC connector part 150 has a busbar, particularly an AC busbar 151. The busbar or the AC busbar 151 is comprised of a combination of a U-phase busbar (first terminal) 152, a V-phase busbar (second terminal) 153, and a W-phase busbar (third terminal) 154. Each of the busbars 152-154 is a terminal formed using a metal plate, and the busbars 152-154 have the connecting parts 152a, 153a, and 154a at an end, respectively. As illustrated in Fig. 6, through-holes 152b, 153b, and 154b in which bolts BLT are inserted are formed in the connecting parts 152a, 153a, and 154a, respectively.

The U-phase busbar 152, the V-phase busbar 153, and the W-phase busbar 154 may be connected with U-phase wiring 602, V-phase wiring 603, and W-phase wiring 604 of a connector part 601 of a terminal block 600 with bolts BLT, respectively.

The terminal block 600 may include a plate-shaped base part 621, and a protruded part 622 which is protruded from one of principal surfaces of the base part 621. The protruded part 622 of the terminal block 600 is inserted into a window part which is formed in the case 101 of the power converter 100.

The U-phase wiring 602, the V-phase wiring 603, and the W-phase wiring 604 may be wired on one of principal surfaces of the protruded part 622 so that they are separated from each other by an insulation distance therebetween. Through-holes into which bolts BLT are inserted are formed in tip-end parts of the wiring 602-604, and fastening holes (female threaded holes) 602a, 603a, and 604a with which bolts BLT threadedly engage are formed in corresponding parts of the protruded part 622.

Note that a motor-side wiring 611 extending from the motor coils of the motor M may also be connected to the terminal block 600. The motor-side wiring 611 is comprised of a combination of U-phase connection wiring 612 electrically connected to the U-phase wiring 602 of the protruded part 622, V-phase connection wiring 613 electrically connected to the V-phase wiring 603 of the protruded part 622, and W-phase connection wiring 614 electrically connected to the W-phase wiring 604 of the protruded part 622.

Next, as illustrated in Fig. 7, when seeing the connecting parts 152a, 153a, and 154a of the busbars 152-154 from the left of the vehicle V, the connecting parts 152a, 153a, and 154a are not located on the same flat surface. In detail, as illustrated in Figs. 5 and 7, assume there are a virtual plane (first virtual plane) L152 along a connecting surface of the connecting part 152a, a virtual plane (second virtual plane) L153 along a connecting surface of the connecting part 153a, and a virtual plane (third virtual plane) L154 along a connecting surface of the connecting part 154a, respectively.

Each of the connecting surfaces of the connecting parts 152a, 153a, and 154a is a flat plane that extends in the depth direction perpendicular to the paper surface in Fig. 7 and faces the lid 155, when the cross section viewed from the side shown in Figure 7 is used as the reference plane.

As illustrated in Figs. 5 and 7, the virtual plane L152 intersects the virtual plane L153 at a line intersection IL1, and the virtual plane L153 intersects the virtual plane L154 at a line intersection IL2. The above reference plane may be orthogonal to the line intersections IL1 and/or IL2. In other words, the reference plane may be orthogonal to the surfaces, particularly the connecting surfaces of the connecting parts 152a and 153a of the busbars 152 and 153 (i.e., the first and second terminal 152 and 153). For example, the reference plane may be in parallel with the front-and-rear direction and the up-and-down direction of the vehicle V, and may be orthogonal to the vehicle width direction.

Note that the reference plane can be set in any orientation, not limited to the cross-section viewed from the side shown in Figure 7, as long as the reference plane passes through the first and second connections and the tool insertion opening and is orthogonal to the connecting surfaces of the first and second connecting parts.

As illustrated in Fig. 7, the connecting parts 152a, 153a, and 154a are disposed so that the virtual plane L152 intersects with the virtual plane L153 at an angle θ1, and the virtual plane L153 intersects with the virtual plane L154 at an angle θ2. Both the angle θ1 and the angle θ2 may be obtuse angles (angles exceeding 90° and below 180°).

Further, a normal line (first normal line) Ax152 passing through the center of the through-hole (into which bolt BLT is inserted) 152b (a normal line of the connecting surface of the connecting part 152a), a normal line (second normal line) Ax153 passing through the center of the through-hole (into which bolt BLT is inserted) 153b (a normal line of the connecting surface of the connecting part 153a), and a normal line (third normal line) Ax154 passing through the center of the through-hole (into which bolt BLT is inserted) 154b (a normal line of the connecting surface of the connecting part 154a) are drawn. In this case, the normal lines Ax152, Ax153, and Ax154 may intersect with each other in front of and outside the case 101 (intersecting point P1). Note that the case 101 of the power converter 100 may include the case body 101a which accommodates the busbars 152-154, the case lid 101b which closes the upper opening of the case body 101a, and the lid 155 which closes a tool insertion opening 101c formed in the front surface of the case body 101a. The tool insertion opening 101c of the case body 101a is provided in a part of the outer wall of the case body 101a and is an opening for inserting a tool which fastens the bolts BLT in order to connect the connecting parts 152a, 153a, and 154a to the wiring 602-604 (see Figs. 5 and 6.) of the terminal block 600.

Further, the normal lines Ax152, Ax153, and Ax154 pass through the tool insertion opening 101c of the case body 101a at points (positions) P12, P13, and P14. Note that the positions P12, P13, and P14 are arranged on the opening surface along the outer surface of the case body 101a in the tool insertion opening 101c.

Further, the connecting part 152a and the connecting part 153a may be disposed so that they have a gap G1 therebetween, and the connecting part 153a and the connecting part 154a are disposed so that they have a gap G2 therebetween. The gaps G1 and G2 are as small as possible, while securing insulation distances.

The distance between the intersection of the virtual plane L152 and the normal line Ax152 and the intersection of the virtual plane L153 and the normal line Ax153 is L7. The distance between the intersection of the virtual plane L153 and the normal line Ax153 and the intersection of the virtual plane L154 and the normal line Ax154 is L8. The distances L7 and L8 are set to keep the minimum distance, while keeping the insulation distance between the connecting part 152a and the connecting part 153a, and between the connecting part 153a and the connecting part 154a.

Further, the connecting parts 152a, 153a, 154a may be arranged so that the distance L11 between the points P12 and P13 is shorter than the distance L7, and the distance L12 between the points P13 and P14 is shorter than the distance L8 in the vertical direction.

Note that, in this embodiment, the gap size between a position P12 at which the normal line Ax152 passes through the tool insertion opening 101c and an upper edge of the tool insertion opening 101c is L5, and the gap size between a position P14 at which the normal line Ax154 passes through the tool insertion opening 101c and a lower edge of the tool insertion opening 101c is L6. The distances L5 and L6 are set so that they allow the insertion of the tool which fastens the bolts BLT for connecting the wiring 602-604 (see Fig. 6, etc.) of the terminal block 600 to the connecting parts 152a, 153a, and 154a, respectively, and minimize the size (height in this embodiment) L1 of the tool insertion opening 101c.

Furthermore, assume there is a virtual plane VL1 parallel to the tool insertion opening 101c, passing through the intersection of the virtual plane L152 and the normal line Ax152 and the intersection of the virtual plane L154 and the normal line Ax154 for the connecting parts closest to the tool insertion opening 101c (the connecting part 152a and connecting part 154a in this embodiment). L9 is defined as the shortest distance to the virtual plane VL1 from the outer surface of the outer wall of the case body 101a where the tool insertion opening 101c is provided. Furthermore, assume there is a virtual plane VL2 parallel to the tool insertion opening 101c, passing through a point half of the distance L9 (1/2 x L9). In this case, the intersection point P1 is located on the opposite side of the location where the connecting parts 152a, 154a are located, with respect to the virtual plane VL2.

### 5. Effects

In the power converter 100 according to this embodiment, the connecting part 152a of the U-phase busbar 152 and the connecting part 153a of the V-phase busbar 153 are arranged such that the distance L11 between the points (positions) P12 and P13 where the normal line (first normal line) Ax152 of the U-phase busbar 152 and the normal line (second normal line) of the V-phase busbar 153 pass through the tool insertion opening 101c, respectively, is shorter than the distance L7 between the intersection of the normal line Ax152 and the connecting surface in the U-phase busbar 152 and the intersection of the normal line Ax153 and the connecting surface in the V-phase busbar 153.

Further, in the power converter 100, the connecting part 153a of the V-phase busbar 153 and the connecting part 154a of the W-phase busbar 154 are arranged such that the distance L12 between the points (positions) P13 and P14 where the normal line (second normal line) Ax153 of the V-phase busbar 153 and the normal line (third normal line) of the W-phase busbar 154 pass through the tool insertion opening 101c respectively is shorter than the distance L8 between the intersection of the normal line ax153 and the connecting surface in the V-phase busbar 153 and the intersection of the normal line Ax154 and the connecting surface in the W-phase busbar 154.

Therefore, in the power conversion converter 100, the size of the tool insertion opening 101c in the case 101 (especially, the size in the vertical direction in this embodiment) can be downsized compared to the situation where radial diffusion occurs outward, as shown in Fig. 15, and the size of the case 101 itself can be reduced.

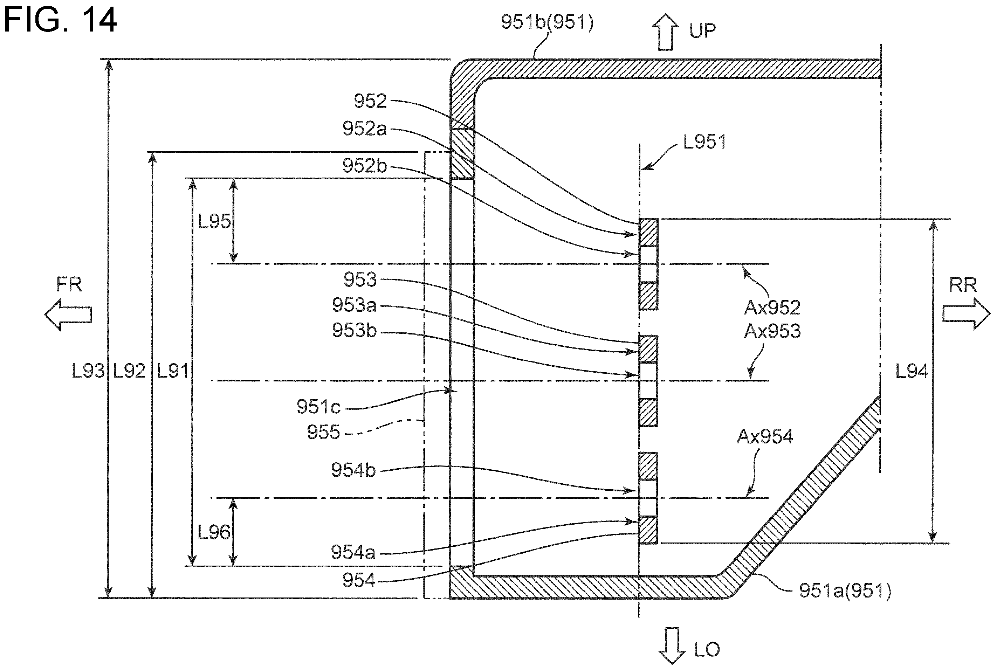

Further, in the power converter 100 according to this embodiment, the connecting part 152a of the U-phase busbar 152 and the connecting part 153a of the V-phase busbar 153 are disposed so that the virtual planes L152 and L153 along the mutual connecting surface intersect with each other at the obtuse angle (angle θ1). Therefore, as compared with a case where the connecting parts of all the busbars are disposed so that virtual planes are parallel to each other, a space (a height L4 in Fig. 7) which the connecting parts 152a, 153a, and 154a of the three busbars 152-154 occupy can be reduced by amounts of inclination of the connecting part 152a of the U-phase busbar 152 and the connecting part 154a of the W-phase busbar 154 with respect to the connecting part 153a of the V-phase busbar 153. That is, as illustrated by the comparative example in Fig. 14, when connecting parts 952a, 953a, and 954a of three busbars 952-954 are located on the same virtual plane L951, a space (a height L94 in Fig. 14) which the three busbars 952, 953, and 954 occupy becomes larger than the height L4, if the gaps between the connecting parts 952a and 953a and 954a are the same.

On the other hand, in the power converter 100 according to this embodiment, the space (the height L4 of Fig. 7) which the connecting parts 152a, 153a, and 154a of the three busbars 152-154 occupy can be reduced by amounts of inclination of the connecting part 152a of the U-phase busbar 152 and the connecting part 154a of the W-phase busbar 154 with respect to the connecting part 153a of the V-phase busbar 153.

Therefore, in the power converter 100 according to this embodiment, the case 101 which accommodates the three busbars 152-154 can be downsized.

Further, in the power converter 100, the normal lines Ax152, Ax153, and Ax154 are disposed so that they pass through the tool insertion opening 101c of the case body 101a and intersect with each other at the point P1 located outside the case 101 (outside the tool insertion opening 101c). Therefore, compared with a case where three normal lines Ax952, Ax953, and Ax954, which pass through the center of through-holes 952b, 953b, and 954b, are parallel to each other as the comparative example illustrated in Fig. 14, and a case where three normal lines Ax902, Ax903, and Ax904 spread radially outwardly as illustrated in Fig. 15, the size (height) L1 of the tool insertion opening 101c of the case body 101a can be reduced. For this reason, the size (height) L2 of the lid 155 and the size (height) L3 of the case 101 can be reduced.

Further, in the power converter 100, since the gaps G1 and G2 between the adjacent connecting parts 152a, 153a, and 154a are set more than the insulation distance, it is not necessary to insert insulators, such as ribs, into the gaps between the connecting parts 152a, 153a, and 154a. For this reason, even if the virtual planes L152, L153, and L154 intersect with each other at the obtuse angle in a dented manner, the tool can be inserted easily to the connecting parts 152a, 153a, and 154a, and the manufacturing cost can be reduced. Note that if the gaps G1 and G2 between the adjacent connecting parts 152a, 153a, and 154a are the minimum distances more than the insulation distance, it is advantageous to reduce the external size of the power converter 100.

Further, as illustrated in Fig. 7, in the power converter 100, since the size (height) L1 of the tool insertion opening 101c of the case body 101a is set shorter than the height L4 according to the vertical layout of the connecting parts 152a, 153a, and 154a of the three busbars 152-154, the tool insertion opening 101c for inserting the tool in a narrow area can be provided. Therefore, it is further advantageous to reduce the size (height) L2 of the lid 155 and the size (height) L3 of the case 101 of the power converter 100.

Note that, in the comparative example illustrated in Fig. 14, since the connecting surfaces (the flat surfaces facing a lid 955) of the connecting parts 952a, 953a, and 954a are arranged along the same virtual plane L951, the vertical layout height (height) L94 of the connecting parts 952a, 953a, and 954a becomes longer than the height L4 according to the layout of this embodiment. Further, in the comparative example, since the connecting parts 952a, 953a, and 954a are disposed so that the normal lines Ax952, Ax953, and Ax954 are parallel to each other, the size (height) L91 of a tool insertion opening 951c of a case body 951a must become longer than the size L1 of this embodiment, and it becomes necessary to make a size (height) L93 of a case 951 which is comprised of the lid 955, and the case body 951a and a case lid 951b larger than that of this embodiment.

Note that when a gap size L95 between the normal line Ax952 and an upper edge of the tool insertion opening 951c and a gap size L96 between the normal line Ax954 and a lower edge of the tool insertion opening 951c in Fig. 14 are the same as the distance L5 and the distance L6 illustrated in Fig. 7, respectively, it is necessary to make the size (height) L91 of the tool insertion opening 951c, a size (height) L92 of the lid 955, and the size (height) L93 of the case 951 larger than those of this embodiment illustrated in Fig. 7, because the normal lines Ax952 and Ax954 are not inclined like in this embodiment.

In this embodiment, the power converter 100 is carried in the powertrain room R1 of the vehicle V, and, as illustrated in Fig. 3, etc., the tool insertion opening 101c of the case body 101a is disposed so that it is oriented to the front of the vehicle V (an input direction of expected load to the vehicle V). Further, the case 101 of the power converter 100 is disposed so that an end part of the vehicle V (the front end part 150a of the AC connector part 150) becomes flush with the front end part 511a of the first motor housing 511. Therefore, in the power converter 100, if an impact load is inputted to the vehicle V from the front, the load will not be intensively inputted into the power converter 100, thereby securing high safety.

Note that, in this embodiment, although the front end part 150a of the case 101 of the power converter 100 is disposed so that it becomes flush with the front end part 511a of the first motor housing 511 (with the virtual plane L in Fig. 3), higher safety can be secured by disposing the front end part 150a of the case 101 of the power converter 100 rearward of the front end part 511a of the first motor housing 511.

As described above, in the power converter 100 according to this embodiment, the external size of the case 101 can be reduced, while the three busbars 152-154 for the electric connection with the motor M as external apparatuses are provided inside the case 101.

### [Second Embodiment]

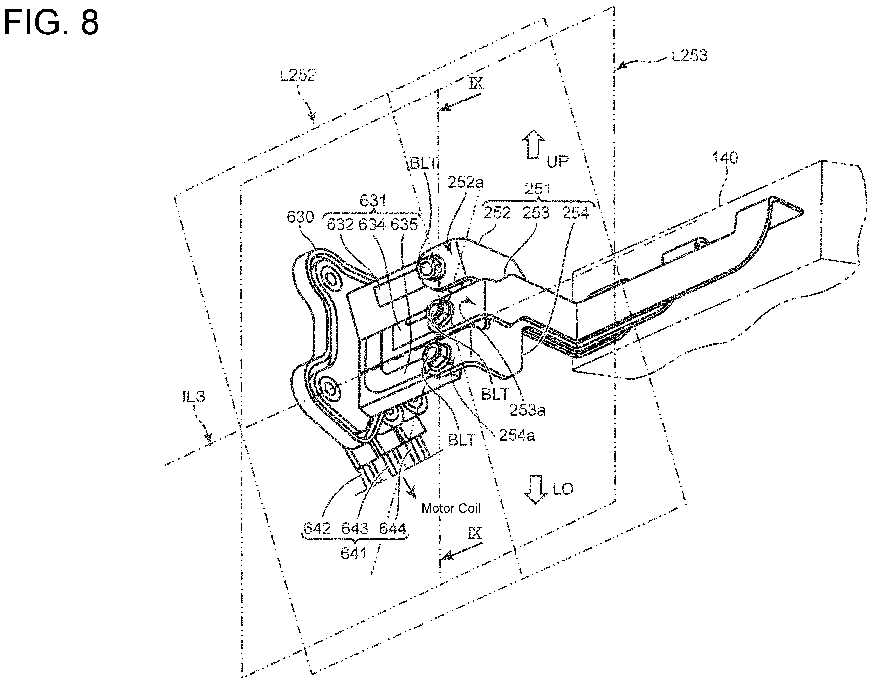

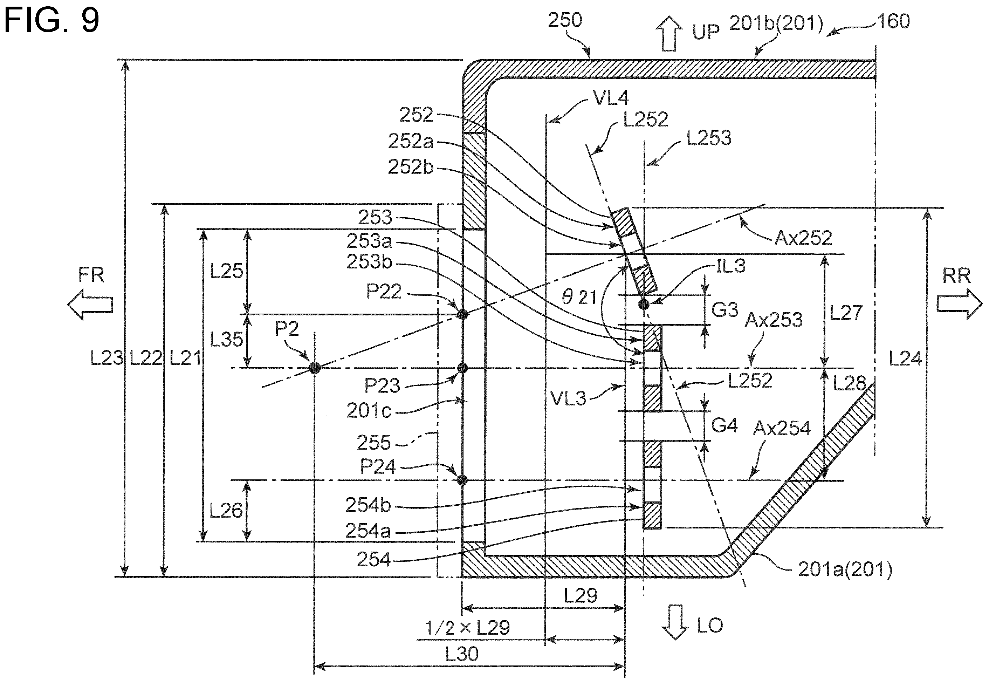

A power converter 160 according to a second embodiment of the present invention is described with reference to Figs. 8 and 9. Note that the power converter 160 according to this embodiment is also one example of the electric apparatus, and it is different from the first embodiment only in the layout of connecting parts 252a, 253a, and 254a of busbars (wiring) 252-254 comprising an AC bus bar 251 in an AC connector section 250, and other configurations are the same as those of the first embodiment. For this reason, in Figs. 8 and 9, the connecting parts 252a, 253a, and 254a of the busbars 252-254, and their peripheries are selectively illustrated. Further, below, explanation of those overlapping with the first embodiment is omitted.

As illustrated in Fig. 8, the AC connector section 250 the power converter 160 according to this embodiment has the busbar, particularly the AC busbar 251. The AC busbar 251 consists of the combination of the U-phase busbar (terminal) 252, V-phase busbar (terminal) 253, and W-phase busbar (terminal) 254. Each busbar 252-254 is also a terminal formed using metal material and has connecting parts 252a, 253a, and 254a at the ends. As shown in Fig. 8, each busbar 252 to 254 is connected to the wires 632 to 634 in the connector section 631 of the terminal block 630 at the connecting parts 252a, 253a, 254a using bolts BLT. As shown in Fig. 9, each connecting part 252a, 253a, 254a has a through-hole 252b, 253b, 254b that permits insertion of a bolt BLT.

Note that wiring 641 (connection wiring 642 to 644) on the motor side extending from the motor coil of the motor M may also be connected to the terminal block 630.

As illustrated in Fig. 9, when viewing the connecting parts 252a, 253a, and 254a of the busbars 252-254 from the left of the vehicle V, the connecting part 252a and the connecting part 253a are not located on the same flat surface, but the connecting part 253a and the connecting part 254a are located on the same flat surface. In detail, as shown in Figs. 8 and 9, assume there are a virtual plane (first virtual plane) L252 along the connecting surface of the connecting part 252a and a virtual plane (second virtual plane) L253 along the connecting surfaces of the connecting parts 253a and 254a, respectively.

As in the first embodiment above, each connecting surface of the connecting parts 252a, 253a, and 254a is a flat plane that extends in the depth direction orthogonal to the paper surface of Fig. 9 and faces the lid 255, when the cross section viewed from the side shown in Fig. 9 is used as the reference plane.

As illustrated in Figs. 8 and 9, the virtual plane L252 and virtual plane L253 intersect at intersection IL3. The above reference plane is orthogonal to the intersection IL3.

Note that, as in the first embodiment above, the reference plane can be set in any orientation, not limited to the cross-section viewed from the side shown in Fig. 9, as long as the reference plane passes through both the first and second connecting parts and the tool insertion opening, and is orthogonal to the connecting surfaces of both the first and second connecting parts.

As illustrated in Fig. 9, the connecting part 252a and the connecting part 253a are disposed so that the virtual plane L252 and the virtual plane L253 intersect with each other at an angle 621. The angle θ21 may be an obtuse angle (an angle exceeding 90° and below 180°).

On the other hand, the connecting surface (the flat surface facing the tool insertion opening 201c) of the connecting part 254a is oriented along the virtual plane L253. That is, in this embodiment, the connecting surface of the connecting part 253a and the connecting surface of the connecting part 254a are oriented along one virtual plane L253.

A normal line of the connecting surface of the connecting part 252a (a normal line (first normal line) Ax252 passing through the center of a through-hole 252b), a normal line of the connecting surface of the connecting part 253a (a normal line (second normal line) Ax253 passing through the center of a through-hole 253b), and a normal line of the connecting surface of the connecting part 254a (a normal line (third normal line) Ax254 passing through the center of a through-hole 254b) are drawn. In this case, the normal line Ax252 and the normal line Ax253 intersect with each other in front of and outside a case 201 (at an intersecting point P2).

On the other hand, the connecting part 253a and the connecting part 254a may be disposed so that the normal line Ax253 and the normal line Ax254 are substantially parallel to each other.

Note that the case 201 of the power converter 160 may also open upwardly, and may include a case body 201a which accommodates the busbars 252-254, and a case lid 201b which closes the opening of the case body 201a. In a part of the outer wall at the front side of the case body 201a, the tool insertion opening 201c for inserting the tool which fastens the bolts BLT for connecting the connecting parts 252a, 253a, and 254a to the wiring 602-604 of the terminal block 600 (see Figs. 5 and 6.) is formed. Further, the power converter 160 may also be provided with the lid 255 which closes the tool insertion opening 201c.

The normal lines Ax252, Ax253, and Ax254 pass through the tool insertion opening 201c of the case body 201a at points (positions) P22, P23, and P24. The points P22, P23, and P24 are located on the opening surface along the outer surface of the case body 201a in the tool insertion opening 201c.

The connecting part 252a and the connecting part 253a may be disposed so that a gap G3 is formed therebetween, and the connecting part 253a and the connecting part 254a may be disposed so that a gap G4 is formed therebetween. The gaps G3 and G4 are set as small as possible, while securing the insulation distance. The distance between the intersection of the virtual plane L252 and normal line Ax252 and the intersection of virtual plane L253 and normal Ax253 is L27. The distance between the intersection of the virtual plane L253 and normal line Ax253 and the intersection of virtual plane L253 and normal line Ax254 is L28. The distances L27 and L28 are set to be the minimum distances, while maintaining an insulation distance between the connecting parts 252a and 253a, and between the connecting parts 253a and 254a.

Further, the connecting parts 252a and 253a may be arranged so that the distance L35 between points P22 and P23 in the vertical direction is shorter than the distance L27.

Note that, in this embodiment, a distance (gap size) between a point (position) P22 at which the normal line Ax252 passes through the tool insertion opening 201c and an upper edge of the tool insertion opening 201c is L25, and a distance (gap size) between a point (position) P24 at which the normal line Ax254 passes through the tool insertion opening 201c and a lower edge of the tool insertion opening 201c is L26. The distances L25 and L26 may be set so that insertion of the tool which fastens the bolts BLT for connecting the wiring 602-604 of the terminal block 600 (see Fig. 6.) to the connecting parts 252a, 253a, and 254a is allowed, and a size (height) L21 of the tool insertion opening 201c is minimized.

Furthermore, for the connecting part closest to the tool insertion opening 201c (in this case, connecting part 252a), assume there is a virtual plane VL3 parallel to the tool insertion opening 201c, passing through the intersection of the virtual plane L252 and the normal line Ax252 (intersection of the reference plane and the intersection line IL3). The shortest distance to the virtual plane VL3 from the outer surface of the outer wall of the case body 201a where the tool insertion opening 201c is provided is L29. Furthermore, assume there is a virtual plane VL4 passing through a point at half the distance L29 (1/2 x L29) and parallel to the tool insertion opening 201c. In this case, the intersection point P2 may be located on the opposite side of the location where the connection 252a is located, with respect to the virtual plane VL4.

Also in the power converter 160 according to this embodiment, the connecting part 252a of the U-phase busbar 252 and the connecting part 253a of the V-phase busbar 253 may be disposed so that the virtual planes L252 and L253 along the mutual connecting surface intersect with each other at an obtuse angle (angle θ21). Therefore, as compared with the comparative example (see Fig. 14) in which the connecting parts of all the busbars are disposed so that the virtual planes are parallel to each other, a space (a height L24 of Fig. 9) which the connecting parts 252a, 253a, and 254a of the three busbars 252-254 occupy can be reduced in the size by an amount of the relative inclination of the connecting part 252a of the U-phase busbar 252 with respect to the connecting part 253a of the V-phase busbar 253. That is, when the connecting parts 952a, 953a, and 954a of the three busbars 952-954 are located on the same virtual plane L951 like in the comparative example illustrated in Fig. 14, the space (the height L94 of Fig. 14) which the three busbars 952, 953, and 954 occupy becomes larger than the size L24, if the gaps between the connecting parts 952a, 953a, and 954a are the same.

On the other hand, in the power converter 160 according to this embodiment, the space (the height L24 of Fig. 9) which the connecting parts 252a, 253a, and 254a of the three busbars 252-254 occupy can be reduced in the size by an amount of the relative inclination of the connecting part 252a of the U-phase busbar 252 with respect to the connecting part 253a of the V-phase busbar 253.

Further, in the power converter 160, the normal lines Ax252 and Ax253 are disposed so that they pass through a tool insertion opening 201c of the lid 255 and intersect with each other at the point P2 located outside the case 201 (outside the tool insertion opening 201c). Therefore, as compared with the case where the three normal lines Ax952, Ax953, and Ax954 are parallel to each other like the comparative example illustrated in Fig. 14, and the case where three normal lines Ax902, Ax903, and Ax904 radially spread outwardly as illustrated in Fig. 15, the size (height L21) of the tool insertion opening 201c of the case body 201a can be reduced. For this reason, a size (height L22) of the lid 255 which closes the tool insertion opening 201c, and a size (height) L23 of the case 201 which is comprised of a combination of the case body 201a and the case lid 201b can be reduced.

Further, also in the power converter 160, since the gaps G3 and G4 of the adjacent connecting parts 252a, 253a, and 254a are set more than the insulation distance, the same effects as the first embodiment can be achieved. Note that, also in this embodiment, by setting the gaps G3 and G4 between the adjacent connecting parts 252a, 253a, and 254a as the minimum distance more than the insulation distance, it is advantageous to reduce the external size of the power converter 160.

### [Third Embodiment]

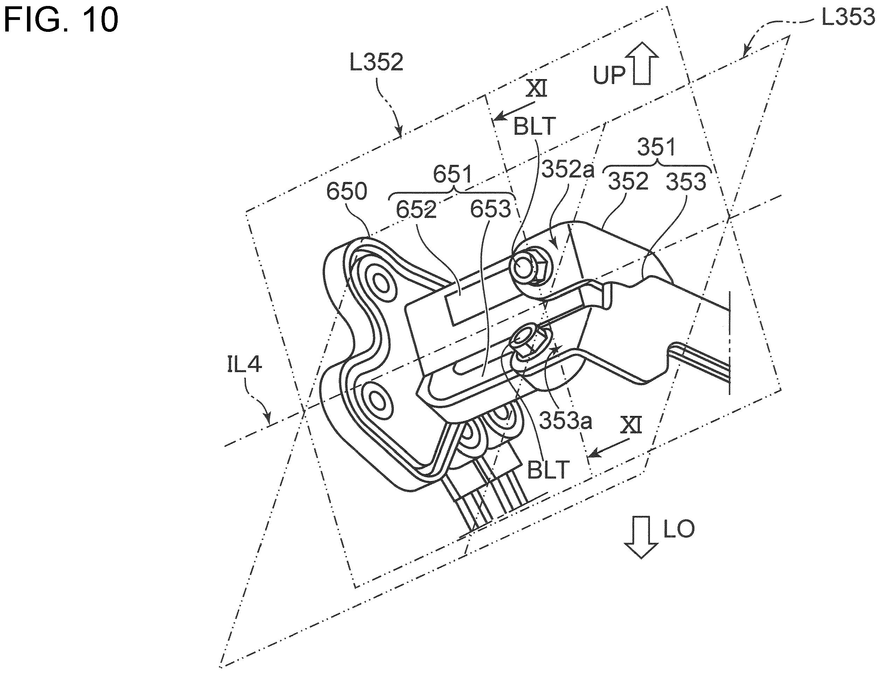

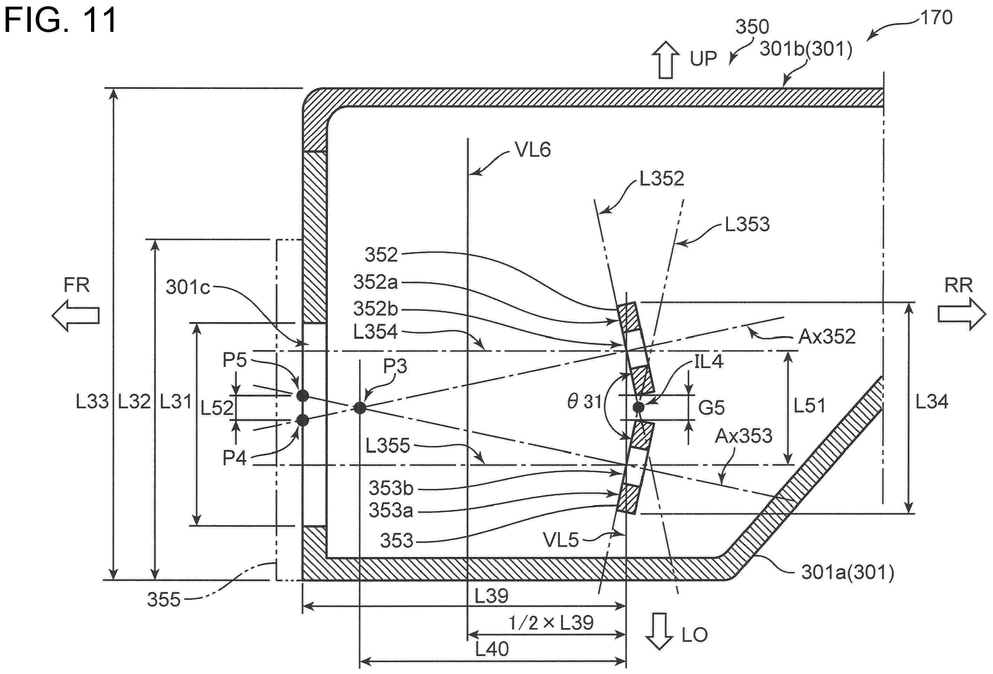

A power converter 170 according to a third embodiment of the present invention is described with reference to Figs. 10 and 11. Note that the power converter 170 according to this embodiment is also one example of the electric apparatus, which differs from the first and second embodiments only in the layout of connecting parts 352a and 353a of busbars (wiring) 352 and 353, and is the same as the first and second embodiments in other configurations. For this reason, in Fig. 11, the connecting parts 352a and 353a of the busbars 352 and 353, and their peripheries are selectively illustrated. Further, below, explanation of those overlapping with the first and second embodiments is omitted.

As illustrated in Fig. 10, in the power converter 170 according to this embodiment, an AC connector part 350 has an AC busbar 351. The AC busbar 351 includes the two busbars 352 and 353. That is, the power converter 170 according to this embodiment performs output and input of AC power to/from an external apparatus (motor, etc.) with a single-phase two-wire system. One of the busbars 352 and 353 is a voltage line, and the other busbar is a neutral line. Each busbar 352, 353 is also a terminal formed using metal material and has the connecting parts 352a, 353a at the end part.

As illustrated in Figs. 10 and 11, each busbar 352, 353 may be connected to the wires 652, 653 in the connector section 651 of the terminal block 650 at the connecting parts 352a, 353a using bolts BLT. Each connecting part 352a, 353a has a through-hole 352b, 353b that permits insertion of a bolt BLT.

In the power converter 170 according to this embodiment, particularly when seeing the connecting parts 352a and 353a of the busbars 352 and 353 from the left of the vehicle V, the connecting part 352a and the connecting part 353a are not located on the same flat surface. In detail, as shown in Figs. 10 and 11, assume there are a virtual plane (first virtual plane) L352 along the connecting surface of the connecting part 352a and a virtual plane (second virtual plane) L353 along the connecting surface of the connecting part 353a.

Each of the connection surfaces of the connecting parts 352a and 353a may be a flat plane that extends in the depth direction perpendicular to the paper surface of Fig.11 and may face toward the lid 355, when the cross section viewed from the side shown in Fig. 11 is used as the reference plane.

As illustrated in Figs. 10 and 11, the virtual plane L352 may intersect the virtual plane L353 at the intersection IL4. The above reference plane is orthogonal to the intersection IL4.

The reference plane can be set in any orientation, not limited to the cross-section viewed from the side shown in Fig. 11, as long as the reference plane passes through both the first and second connecting parts and the tool insertion opening and is orthogonal to the connecting surfaces of both the first and second connecting parts.

Further, the connecting part 352a and the connecting part 353a are disposed so that the virtual plane L352 and the virtual plane L353 intersect with each other at an angle θ31. The angle θ31 formed between the virtual plane L352 and the virtual plane L353 may be an obtuse angle (an angle exceeding 90° and below 180°), as in the first and second embodiments.

Further, a normal line of the connecting surface of the connecting part 352a (a normal line (first normal line) Ax352 passing through the center of a through-hole 352b), and a normal line of the connecting surface of the connecting part 353a (a normal line (second normal line) Ax353 passing through the center of a through-hole 353b) are drawn. In this case, the normal line Ax352 and the normal line Ax353 may intersect at a point P3 located inside a case 301, which is inward of a tool insertion opening 301c formed in a case body 301a.

The case 301 of the power converter 170 may also open upwardly, and includes the case body 301a which accommodates the busbars 352 and 353, and a case lid 301b which closes the opening of the case body 301a. The tool insertion opening 301c for inserting a tool which fastens the bolts BLT for connecting the connecting parts 352a and 353a to the wiring 652, 653 of the terminal block 650 (see Fig. 10) is formed in a part of the outer wall at the front side of the case body 301a.

The normal lines Ax352 and Ax353 pass through the tool insertion opening 301c of the case body 301a at the points (positions) P5 and P6. The points P5 and P6 may be located on the opening surface along the outer surface of the case body 301a in the tool insertion opening 301c.

The connecting part 352a and the connecting part 353a may be disposed with a gap G5 therebetween. The gap G5 is set as small as possible, while securing the insulation distance.

For the connecting parts closest to the tool insertion opening 301c (in this case, connections 352a and 353a), assume there is a virtual plane VL5 parallel to the tool insertion opening 301c, passing through the intersection of the virtual plane L352 with the normal line Ax352 and the intersection of the virtual plane L353 with the normal line Ax353. Further, L39 is the shortest distance to the virtual plane VL5 from the outer surface of the outer wall of the case body 301a where the tool insertion opening 301c is provided. Furthermore, assume there is a virtual plane VL6 parallel to the tool insertion opening 301c, passing through a point half of the distance L39 (1/2 x L39). In this case, the intersection point P3 is located on the opposite side of the side on which the connections 352a, 353a are located, with respect to the virtual plane VL6.

Further, in the power converter 170 according to this embodiment, the connecting part 352a of the busbar 352 and the connecting part 353a of the busbar 353 may be disposed so that the virtual planes L352 and L353 along the mutual connecting surface intersect with each other at an obtuse angle (angle θ31). Therefore, as compared with the comparative example (see Fig. 14) in which the connecting parts of all the busbars are disposed so that the virtual planes are parallel to each other, a space (height L34 in Fig. 11) which the connecting parts 352a and 353a of the busbars 352 and 353 occupy can be reduced in the size by an amount of the relative inclination of the connecting part 352a of the busbar 352 with respect to the connecting part 353a of the busbar 353.

Further, in the power converter 170, since the normal lines Ax352 and Ax353 intersect with each other at the point P3 inside the case body 301a (inward of the tool insertion opening 301c), a size (height) L31 of the tool insertion opening 301c of the case body 301a can be reduced, as compared with the case where the three normal lines Ax952, Ax953, and Ax954 are parallel to each other like the comparative example illustrated in Fig. 14, and the case where the three normal lines Ax902, Ax903, and Ax904 radially spread outwardly as illustrated in Fig. 15. The reason is as follows.

As illustrated in Fig. 11, a position at which the normal line Ax352 passes through the tool insertion opening 301c is set as a point P4, and a position at which the normal line Ax353 passes through the tool insertion opening 301c is set as a point P5. Further, an imaginary line (the first imaginary line) L354 which passes through the center of the through-hole 352b of the connecting part 352a and extends horizontally (the second direction), and an imaginary line (the second imaginary line) L355 which passes through the center of the through-hole 353b of the connecting part 353a and extends horizontally are drawn. In this case, the points (positions) P3, P4, and P5 are set so that both the points (positions) P4 and P5 may be located in an area between the imaginary line L354 and the imaginary line L355 in the up-and-down direction (the first direction).

The connecting parts 352, 353 are arranged so that the distance L52 between the points P4 and P5 in the vertical direction is shorter than the distance L51 between the virtual line L354 and the virtual line L355 (the distance between the intersection of the connecting surface of connecting part 352a and the normal line Ax352 and the intersection of the connecting surface of connecting part 353a and the normal line Ax353).

By setting the point (position) P3 as described above, the size (height) L31 of the tool insertion opening 301c can be minimized, while allowing insertion of the tool, even if the intersecting point (intersecting position) P3 of the normal line Ax352 and the normal line Ax353 is located inside the case body 301a unlike the first and second embodiments. Therefore, a size (height) L32 of the lid 355 which closes the tool insertion opening 301c, and a size (height) L33 of the case 301 constituted by the combination of the case body 301a and the case lid 301b can be reduced.

Further, also in the power converter 170, since the gap G5 between the connecting parts 352a and 353a are set more than the insulation distance, the same effects as the first and second embodiments can be achieved. Note that, also in this embodiment, when the gap G5 between the connecting parts 352a and 353a are set as the minimum distance more than the insulation distance, it is advantageous to reduce the external size of the case 301 of the power converter 170.

### [Layout of the connecting parts]

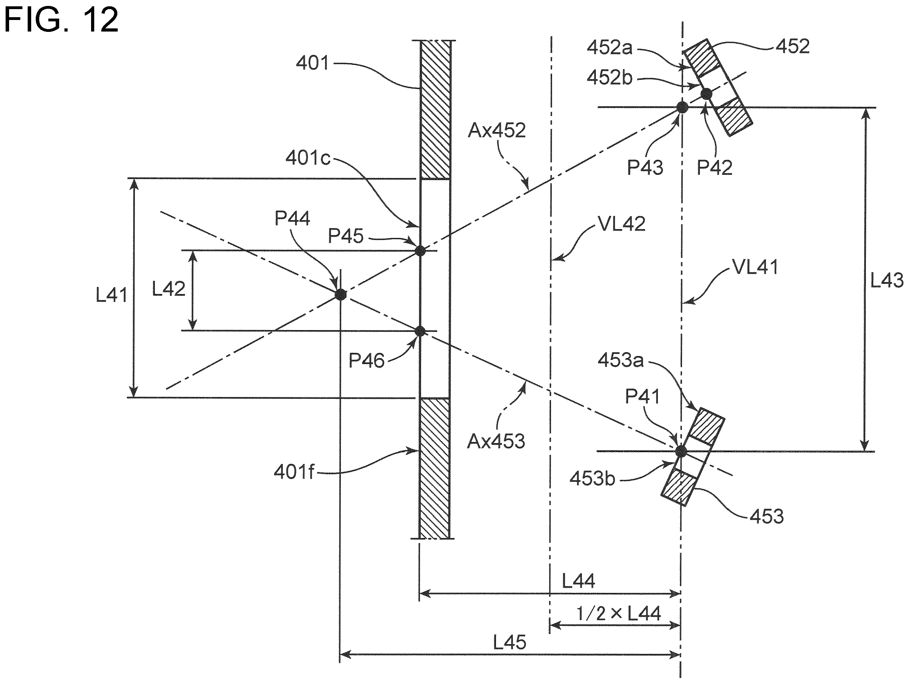

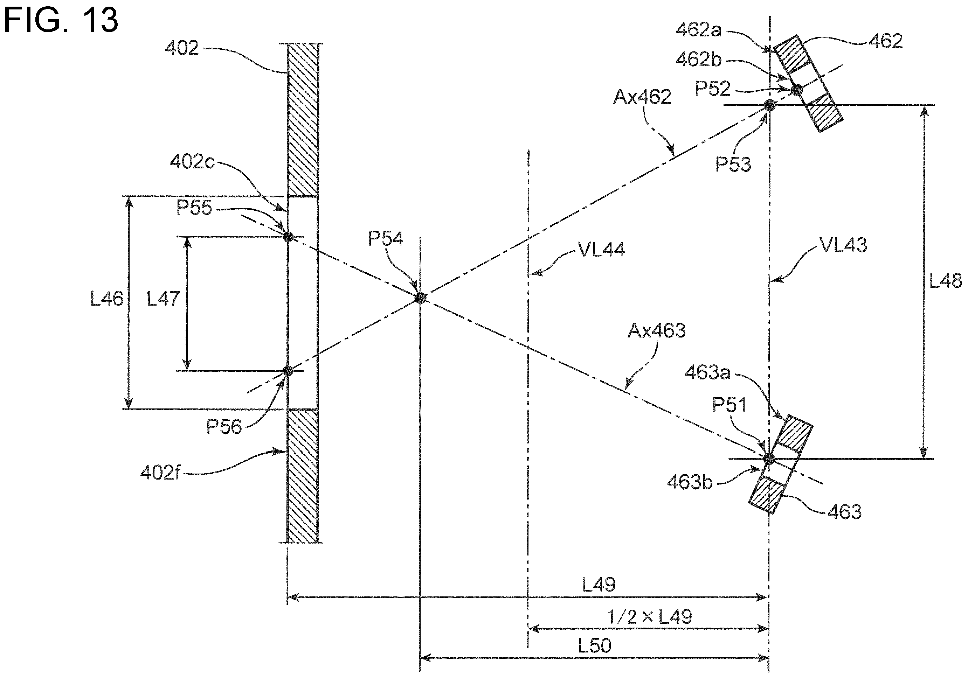

The layout of the connecting parts is explained using Figs. 12 and 13. In Figs. 12 and 13, the AC busbars are shown as an example of a configuration including two busbars 452, 453, 462, 463, but it is also possible to have a configuration with three or more busbars as in the first and second embodiments above.

### [First Example]

As shown in Fig. 12, in the first example, the AC connector part has two busbars 452, 453. The busbars 452, 453 have connecting parts 452a, 453a at their ends, respectively. The connecting parts 452a, 453a are for connecting to the connector part of the terminal block and have through-holes 452b, 453b that allow the insertion of bolts.

The busbars 452, 453 are housed in the case 401. The case 401 has an opening (tool insertion opening) 401c through which a bolt fastening tool is inserted when connecting the connector part of the terminal block to the respective connecting part 452a, 453a of the busbars 452, 453.

In this example, the paper surface of Fig. 12 is also defined as the reference plane. That is, assume there are a hypothetical line along the connecting surface of the connecting part 452a (facing toward the tool insertion opening 401c) and a hypothetical plane along the connecting surface of the connecting part 453a (facing toward the tool insertion opening 401c). The plane orthogonal to the intersection line where the two hypothetical lines cross (the paper plane in Fig. 12) is the reference plane.

In this example, one connecting part 453a may be positioned farther from the tool insertion opening 401c than the other connecting part 452a.

A normal line Ax452 passing through the radial center of the through-hole 452b and orthogonal to the connecting surface of the connecting part 452a is drawn, and a normal line Ax453 passing through the radial center of the through-hole 453b and orthogonal to the connecting surface of the connecting part 453a is drawn. In this case, the normal line Ax452 and the normal line Ax453 pass through the tool insertion opening 401c through the points (positions) P45 and P46 and intersect each other outside of the case 401 (intersection point P44). In this example, the above-mentioned points P45 and P46 are also points located on the opening surface along the outer surface 401f of the case 401 in the tool insertion opening 401c.

Furthermore, for the connecting part 453a on the side closer to the tool insertion opening 401c, assume there is a virtual plane VL41 parallel to the tool insertion opening 401c, passing through the intersection point P41 between the virtual plane along the connecting surface of the connecting part 453a and the normal line Ax453. Further, L44 is the shortest distance to the virtual plane VL41 from the outer surface 401f of the outer wall of the case 401 with the tool insertion opening 401c. Assume there is a virtual plane VL42 parallel to the tool insertion opening 401c, passing through a point at half the distance L44 (1/2 x L44). The intersection of the virtual plane VL41 and the normal line Ax452 is the point P43, and the intersection of the virtual plane along the connecting surface of the connecting part 452a and the normal line Ax452 is the point P42.

In this example, the connecting part 452a may be positioned farther from the tool insertion opening 401c than the connecting part 453a, and thus point P42 is located farther from point P43.

On the reference plane shown in Fig. 12, the triangle defined by point P44, point P43, and point P41 and the triangle defined by point P44, point P45, and point P46 have a similarity relationship. When the distance between points P41 and P43 in the direction along the tool insertion opening 401c is L43 and the distance between points P45 and P46 is L42, the relationship L43 > L42 is satisfied in this example.

Therefore, by applying the layout of this example, the size L41 of the tool insertion opening 401c can be smaller than the size L93 of the tool insertion opening 951c where the normal lines Ax952, Ax953, Ax954 are parallel shown in Fig. 14. In other words, in this example, there is a relationship that the distance L45 between the point P44 and the virtual plane VL41 is longer than the distance (1/2 x L44) between the virtual plane VL41 and the virtual plane VL42. That is, the connecting parts 452a, 453a are arranged such that there is a relationship that both normal lines Ax452 and Ax453 intersect on the opposite side of the side where the connecting parts 452a and 453a are placed, with respect to the virtual plane VL42 passing through the position that is half (1/2 x L44) of the distance L44 between the opening surface of the tool insertion opening 401c and the virtual plane VL41. With this arrangement, the size L41 of the tool insertion opening 401c can be kept smaller than in the comparative example shown in Fig. 14.

### [Second Example]

As shown in Fig. 13, in the second example, the AC connector part has two busbars 462, 463. The busbars 462, 463 have connecting parts 462a, 463a at their ends, respectively. The connection parts 462a, 463a are for connecting to the connector part of the terminal block and have through-holes 462b, 463b that permit insertion of bolts.

The busbars 462, 463 are housed in the case 402. The case 402 has an opening (tool insertion opening) 402c through which a bolt fastening tool is inserted when connecting the connector part of the terminal block to the respective connecting parts 462a, 463a of the busbars 462, 463.

In this example, one connecting part 463a may be positioned farther from the tool insertion opening 402c than the other connecting part 462a.

A normal line Ax462 passing through the radial center of the through-hole 462b and orthogonal to the connecting surface of the connecting part 462a is drawn, and a normal line Ax463 passing through the radial center of the through-hole 463b and orthogonal to the connecting surface of the connecting part 463a is drawn. In this case, the normal line Ax462 and the normal line Ax463 pass through the tool insertion opening 401c through the points P55 and P56. In this example, each of the above locations P55 and P56 is a point located on the opening surface along the outer surface 402f of the case 402 in the tool insertion opening 402c.

Furthermore, for the connecting part 463a on the side closer to the tool insertion aperture 402c, assume there is a virtual plane VL43 parallel to the tool insertion aperture 402c, passing through the intersection point P51 between the virtual plane along the connecting surface of the connecting part 463a and the normal line Ax463. Further, L49 is the shortest distance to the virtual plane VL43 from the outer surface 402f of the outer wall of the case 402 with the tool insertion opening 402c. Assume there is a virtual plane VL44 parallel to the tool insertion opening 402c, passing through a point at half the distance L49 (1/2 x L49). The intersection of the virtual plane VL43 and the normal line Ax462 is the point P53, and the intersection of the virtual plane along the connecting surface of the connecting part 462a and the normal line Ax462 is the point P52.

In this example, point P52 may be located farther from the tool insertion opening 402c than point P53 because the connecting part 462a is located farther than the connecting part 463a.

On the reference plane shown in Fig. 13, the triangle defined by point P54, point P53, and point P51 and the triangle defined by point P54, point P56, and point P55 have a similarity relationship. When the distance between points P51 and P53 in the direction along the tool insertion opening 402c is L48 and the distance between points P55 and P56 is L47, the relationship L48 > L47 is satisfied in this example.

Therefore, by applying the layout of this example, the size L46 of the tool insertion opening 402c can be smaller than the size L93 of the tool insertion opening 951c where the normal lines Ax952, Ax953, Ax954 are parallel shown in Fig. 14. In other words, in this example, there is a relationship that the distance L50 between the point P54 and the virtual plane VL43 is longer than the distance (1/2 x L49) between the virtual plane VL43 and the virtual plane VL44. That is, the connecting parts 462a, 463a are arranged such that there is a relationship that both normal lines Ax462 and Ax463 intersect on the opposite side of the side where the connecting parts 462a and 463a are placed, with respect to the virtual plane VL44 passing through the position that is half (1/2 x L49) of the distance L49 between the opening surface of the tool insertion opening 402c and the virtual plane VL43. With this arrangement, the size L46 of the tool insertion opening 402c can be kept smaller than in the comparative example shown in Fig. 14.

### [Other Modifications]

Although in the first to third embodiments the power converters 100, 160, and 170 are adopted as examples of the electric apparatus, the present invention is not limited to these embodiments. For example, the terminal structure according to the present invention may be applied to a switchboard, a DC-DC converter, an AC transformer, and a motor.

Further, when adopting the power converter as the electric apparatus, the terminal structure of the present invention may be applied to not only the vehicle-mounted power converter but also power converters used for industrial machinery.

Although in the first to third embodiments as well as the above first and second examples, the busbars 152-154, 252-254, 352, 353, 452, 453, 462, and 463 are adopted as examples of the wiring, the present invention is not limited to these types of wiring. For example, the wiring may be a wire harness. In this case, the terminal structure according to the present invention may be applied by joining terminals having a flat-type connecting surface as the connecting parts to the wire harness.

Although, in the first to third embodiments, no insulators are inserted among the connecting parts 152a, 153a, 154a, 252a, 253a, 254a, 352a, and 353a, and the gaps G1-G5 are more than the insulation distance, the present invention is not limited to this. For example, it is possible to insert an insulator such as ribs between adjacent connecting parts and to make the distance between the gaps connected by straight lines between the connecting parts less than the insulation distance.

Although in the first to third embodiments the tool insertion openings 101c, 201c, and 301c are formed in the case bodies 101a, 201a, and 301a of the case 101, 201, and 301, the tool insertion opening may be formed in the case lid.

Further, the tool insertion opening may be an opening which is formed by depressing an end edge of the case body or the case lid, other than the window-like hole.

Although in the first to third embodiments two or three connecting parts 152a, 153a, and 154a, 252a, 253a, and 254a, and 352a and 353a are provided inside the cases 101, 201, and 301, four or more connecting parts may be accommodated in the case.

Although in the first and second embodiments the three connecting parts 152a, 153a, and 154a, and 252a, 253a, and 254a are lined up in the up-and-down direction of the vehicle V, the present invention is not limited to these embodiments. For example, the connecting parts of the multiple terminals may be distributed in the left and right directions. Further, the connecting parts of three or more terminals may be distributed in two directions (up and down and left and right), two directions (front and back and right and left), or even in three directions (up and down, front and back, and left and right). In this case, the plurality of connecting parts are two-dimensionally or three dimensionally disposed within the case.

It should be understood that the embodiments herein are illustrative and not restrictive, since the scope of the invention is defined by the appended claims rather than by the description preceding them.

### DESCRIPTION OF REFERENCE CHARACTERS

100, 160, 170 Power Converter (Electric Apparatus)
101, 201, 301, 401, 402 Case
101c, 201c, 301c, 401c, 402c Tool Insertion Opening
150, 250, 350 AC Connector Part
151, 251, 351 AC Busbar
152,252 U-phase Busbar (Terminal)
152a, 252a Connecting Part
153, 253 V-phase Busbar (Terminal)
153a, 253a Connecting Part
154, 254 W-phase Busbar (Terminal)
154a, 254a Connecting Part
155, 255, 355 Lid
352, 353, 452, 453, 462, 463 Busbar (Terminal)
352a, 353a, 552a, 453a, 462a, 463a Connecting Part

## Claims

1. A terminal structure of an electric apparatus (100; 160; 170), comprising:
a plurality of terminals (152-154; 252-254; 352-353; 452-453; 462-463) at least including a first terminal (152; 252; 352; 452; 462) and a second terminal (153; 253; 353; 453; 463) adjacent to the first terminal (152; 252; 352; 452; 462), each of the terminals (152-154; 252-254; 352-353; 452-453; 462-463) having a connecting part (152a-154a; 252a-254a; 352a-354a; 452a-453a; 462a-463a) that is configured to be electrically connected to an external apparatus and is arranged to extend from a predetermined reference plane to a direction orthogonal to the reference plane; and
a case (101; 201; 301; 401; 402) accommodating the plurality of terminals (152-154; 252-254; 352-353; 452-453; 462-463), and having a tool insertion opening (101c; 201c; 301c; 401c; 402c) into which a tool for electric connection of the plurality of terminals (152-154; 252-254; 352-353; 452-453; 462-463) is to be inserted in a part of an outer wall,
wherein the connecting part (152a-154a; 252a-254a) of each of the plurality of terminals (152-154; 252-254; 352-353; 452-453; 462-463) has a flat connecting surface and a through-hole (152b-154b; 252b-254b) into which a bolt (BLT) for the electrical connection is inserted, and
wherein, when a first normal line (Ax152; Ax252; Ax352; Ax452; Ax462) passing through a radial center of the through-hole (152b; 252b; 352b; 452b; 462b) in the connecting part (152a; 252a; 352a; 452a; 462a) of the first terminal (152; 252; 352; 452; 462) and extending in a direction normal to the connecting surface in the connecting part (152a; 252a; 352a; 452a; 462a) of the first terminal (152; 252; 352; 452; 462), and a second normal line (Ax153; Ax253; Ax353; Ax453; Ax463) passing through a radial center of the through-hole (153b; 253b; 353b; 453b; 463b) in the connecting part (153a; 253a; 353a; 453a; 463a) of the second terminal (153; 253; 353; 453; 463) and extending in a direction normal to the connecting surface in the connecting part (153a; 253a; 353a; 453a; 463a) of the second terminal (153; 253; 353; 453; 463) are drawn, a distance (L11; L35; L52; L42; L47) between a point (P12; P22; P4; P45; P56) where the first normal line (Ax152; Ax252; Ax352; Ax452; Ax462) passes through the tool insertion opening (101c; 201c; 301c; 401c; 402c) and a point (P13; P23; P5; P46; P55) where the second normal line (Ax153; Ax253; Ax353; Ax453; Ax463) passes through the tool insertion opening (101c; 201c; 301c; 401c; 402c) is shorter than a distance (L7; L27; L51; L43; L48) between an intersection of the connecting surface and the first normal line (Ax152; Ax252; Ax352; Ax452; Ax462) in the connecting part (152a; 252a; 352a; 452a; 462a) of the first terminal (152; 252; 352; 452; 462) and an intersection of the connecting surface and the second normal line (Ax153; Ax253; Ax353; Ax453; Ax463) in the connecting part (153a; 253a; 353a; 453a; 463a) of the second terminal (153; 253; 353; 453; 463), when viewed from the direction orthogonal to the reference plane.

2. The terminal structure of claim 1,
wherein there are a first virtual plane (L152; L 252; L 352) along the connecting surface of the connecting part (152a; 252a; 352a) of the first terminal (152; 252; 352) and a second virtual plane (L153; L 253; L 353) along the connecting surface of the connecting part (153a; 253a; 353a) of the second terminal (153; 253; 353),
wherein a shortest distance from an intersection of the first virtual plane (L152; L 252; L 352) and the first normal line (Ax152; Ax252; Ax352) to a part of the outer wall is a first distance, and a shortest distance from an intersection of the second virtual plane (L153; L 253; L 353) and the second normal line (Ax153; Ax253; Ax353) to the part of the outer wall is a second distance,
wherein the reference plane is defined in a direction orthogonal to an intersection (IL1; IL3; IL4) of the first virtual plane (L152; L 252; L 352) and the second virtual plane (L153; L253; L 353) where the first virtual plane (L152; L 252; L 352) and the second virtual plane (L153; L 253; L 353) intersect, and
wherein the connecting part (152a; 252a; 352a) of the first terminal (152; 252; 352) and the connecting part (153a; 253a; 353a) of the second terminal (153; 253; 353) are disposed so that the first virtual plane (L152; L 252; L 352) and the second virtual plane (L153; L 253; L 353) intersect with each other at an obtuse angle, and when viewed from the direction orthogonal to the reference plane, the first normal line (Ax152; Ax252; Ax352) and the second normal line (Ax153; Ax253; Ax353) pass through the tool insertion opening (101c; 201c; 301c), and the first normal line (Ax152; Ax252; Ax352) and the second normal line (Ax153; Ax253; Ax353) intersect with each other at an opposite side of the disposed positions of the connecting parts (152a-153a; 252a-253a; 352a-353a) of the first terminal (152; 252; 352) and the second terminal (153; 253; 353) with respect to a position that is half of a distance of the shorter one of the first distance and the second distance.

3. The terminal structure of claim 1 or 2, wherein the connecting part (152a; 252a; 452a) of the first terminal (152; 252; 452) and the connecting part (153a; 253a; 453a) of the second terminal (153; 253; 453) are disposed so that the first normal line (Ax152; Ax252; Ax452) and the second normal line (Ax153; Ax253; Ax453) intersect with each other outside the case (101; 201; 401), when viewed from the direction orthogonal to the reference plane.

4. The terminal structure of any one of the preceding claims, wherein the plurality of terminals (152-154; 252-254; 352-353) are disposed so that gaps (G1-G5) between adjacent connecting parts are more than an insulation distance.

5. The terminal structure of any one of the preceding claims referring to claim 2, wherein, in a direction orthogonal to a direction in which the first distance and the second distance are defined in the reference plane, the tool insertion opening (101c; 201c; 301c) is formed so that an opening length (L1; L21; L31) of the tool insertion opening (101c; 201c; 301c) is shorter than a layout length (L4; L7; L8; L24; L34) of the connecting parts (152a-154a; 252a-254a; 352a-354a) of the plurality of terminals (152-154; 252-254; 352-353).

6. The terminal structure of any one of the preceding claims referring to claim 2,
wherein the electric apparatus (100; 160; 170) is a power converter configured to convert direct current power into alternating current power,
wherein the external apparatus is a three-phase AC motor (M) configured to rotate in response to supply of three-phase alternating current power,
wherein the plurality of terminals (152-154) are disposed in an electric power supply passage to the three-phase AC motor (M), and are comprised of the first terminal (152), the second terminal (153), and a third terminal (154) of which a connecting part (154a) is disposed adjacent to the connecting part (153a) of the second terminal (153),
wherein a third virtual plane (L154) is formed along a connecting surface of the connecting part (154a) of the third terminal (154) and a third normal line (Ax154) is formed passing through a radial center of the through-hole (154b) in the connecting part (154a) of the third terminal (154) and extending in a direction normal to the connecting surface in the connecting part (154a) of the third terminal (154), and
wherein, when a shortest distance from a point where the third virtual plane (L154) and the third normal line (Ax154) intersect to the part of the outer wall is a third distance, the connecting part of the third terminal (154) is disposed so that the second virtual plane (L153) and the third virtual plane (L154) intersect with each other at an obtuse angle, and when viewed from the direction orthogonal to the reference plane, the second normal line (Ax153) and the third normal line (Ax154) pass through the tool insertion opening (101c), and the second normal line (Ax153) and the third normal line (Ax154) intersect with each other at an opposite side of the disposed positions of the connecting parts (153a, 154a) of the second terminal (153) and the third terminal (154) with respect to a position that is half of a distance of the shorter one of the second distance and the third distance.

7. The terminal structure of claim 6, wherein the connecting part of the second terminal (153) and the connecting part of the third terminal (154) are disposed so that the second normal line (Ax153) and the third normal line (Ax154) intersect with each other outside the case (101), when viewed from the direction orthogonal to the reference plane.

8. The terminal structure of any one of the preceding claims,
wherein, when viewed from the direction orthogonal to the reference plane, a direction connecting a point (P4) where the first normal line (Ax352) passes through the tool insertion opening (301c) and a point (P5) where the second normal line (Ax353) passes through the tool insertion opening (301c) is a first direction, and a direction orthogonal to the first direction on the reference plane is a second direction, and
wherein, when a first imaginary line (L354) passing through a radial center of the through-hole (352b) in the connecting part (352a) of the first terminal (352) and extending in the second direction, and a second imaginary line (L355) passing through a radial center of the through-hole (353b) in the connecting part (353a) of the second terminal (353) and extending in the second direction are drawn, the point (P4) where the first normal line (Ax352) passes through the tool insertion opening (301c) and the point (P5) where the second normal line (Ax353) passes through the tool insertion opening (301c) are positioned in an area between the first imaginary line (L354) and the second imaginary line (L355) in the first direction.

9. The terminal structure of any one of the receding claims referring to claim 6,
wherein the motor (M) is a motor for propelling a vehicle (V), the motor mounted in a powertrain room (R1) of the vehicle (V) and having a motor housing (511, 521) serving as an outer cell,
wherein a transmission (TM) having an axle housing (531) serving as an outer cell is mounted adjacent to the motor in the powertrain room (R1),
wherein the case (101; 201; 301; 401; 402) is disposed on at least one of the motor housing (511, 521) and the axle housing (531) so that the tool insertion opening (101c; 201c; 301c; 401c; 402c) is oriented to an input side of an impact load expected in the vehicle (V), and
wherein an end of the case (101; 201; 301; 401; 402) on the input side is flush in the surface with the motor housing (511, 521) or the axle housing (531), or is located on an opposite side from the input side.

10. An electric apparatus (100; 160; 170) including the terminal structure of any one of the preceding claims.

11. A vehicle (V) including the electric apparatus (100; 160; 170) of claim 10.

## Patentansprüche

1. Eine Anschlussstruktur einer elektrischen Vorrichtung (100; 160; 170), umfassend:
eine Vielzahl von Anschlüssen (152-154; 252-254; 352-353; 452-453; 462-463), die zumindest einen ersten Anschluss (152; 252; 352; 452; 462) und einen zweiten Anschluss (153; 253; 353; 453; 463) beinhaltet, der an den ersten Anschluss (152; 252; 352; 452; 462) angrenzt, wobei jeder der Anschlüsse (152-154; 252-254; 352-353; 452-453; 462-463) einen Anschlussabschnitt (152a-154a; 252a-254a; 352a-354a; 452a-453a; 462a-463a) aufweist, der konfiguriert ist, um elektrisch mit einer externen Vorrichtung verbunden zu sein, und so angeordnet ist, dass es sich von einer vorbestimmten Referenzebene in eine Richtung orthogonal zur Referenzebene erstreckt; und
ein Gehäuse (101; 201; 301; 401; 402), das die Vielzahl von Anschlüssen (152-154; 252-254; 352-353; 452-453; 462-463) aufnimmt und eine Werkzeugeinführöffnung (101c; 201c; 301c; 401c; 402c) aufweist, in die ein Werkzeug zum elektrischen Verbinden der Vielzahl von Anschlüssen (152-154; 252-254; 352-353; 452-453; 462-463) in einen Teil einer Außenwand einzuführen ist,
wobei der Anschlussabschnitt (152a-154a; 252a-254a) jedes der Vielzahl von Anschlüssen (152-154; 252-254; 352-353; 452-453; 462-463) eine flache Anschlussfläche und ein Durchgangsloch (152b-154b; 252b-254b) aufweist, in das ein Bolzen (BLT) zur elektrischen Verbindung eingeführt wird, und
wobei, wenn eine erste Normale (Ax152; Ax252; Ax352; Ax452; Ax462), die durch ein radiales Zentrum des Durchgangslochs (152b; 252b; 352b; 452b; 462b) im Anschlussabschnitt (152a; 252a; 352a; 452a; 462a) des ersten Anschlusses (152; 252; 352; 452; 462) verläuft und sich in einer Richtung senkrecht zur Anschlussfläche im Anschlussabschnitt (152a; 252a; 352a; 452a; 462a) des ersten Anschlusses (152; 252; 352; 452; 462) erstreckt, und eine zweite Normale (Ax153; Ax253; Ax353; Ax453; Ax463), die durch ein radiales Zentrum des Durchgangslochs (153b; 253b; 353b; 453b; 463b) im Anschlussabschnitt (153a; 253a; 353a; 453a; 463a) des zweiten Anschlusses (153; 253; 353; 453; 463) verläuft und sich in einer Richtung senkrecht zur Anschlussfläche im Anschlussabschnitt (153a; 253a; 353a; 453a; 463a) des zweiten Anschlusses (153; 253; 353; 453; 463) erstreckt, gezeichnet werden, ein Abstand (L11; L35; L52; L42; L47) zwischen einem Punkt (P12; P22; P4; P45; P56), an dem die erste Normale (Ax152; Ax252; Ax352; Ax452; Ax462) durch die Werkzeugeinführöffnung (101c; 201c; 301c; 401c; 402c) verläuft, und einem Punkt (P13; P23; P5; P46; P55), durch den die zweite Normale (Ax153; Ax253; Ax353; Ax453; Ax463) verläuft, durch die Werkzeug-Einführöffnung (101c; 201c; 301c; 401c; 402c) verläuft, kürzer ist als ein Abstand (L7; L27; L51; L43; L48) zwischen einem Schnittpunkt der Anschlussfläche und der ersten Normalen (Ax152; Ax252; Ax352; Ax452; Ax462) im Anschlussabschnitt (152a; 252a; 352a; 452a; 462a) des ersten Anschlusses (152; 252; 352; 452; 462) und einem Schnittpunkt der Anschlussfläche und der zweiten Normalen (Ax153; Ax253; Ax353; Ax453; Ax463) im Anschlussabschnitt (153a; 253a; 353a; 453a; 463a) des zweiten Anschlusses (153; 253; 353; 453; 463), wenn aus der Richtung senkrecht zur Referenzebene betrachtet.

2. Die Anschlussstruktur nach Anspruch 1,
wobei eine erste virtuelle Ebene (L152; L 252; L 352) entlang der Anschlussfläche des Anschlussabschnitts (152a; 252a; 352a) des ersten Anschlusses (152; 252; 352) und eine zweite virtuelle Ebene (L153; L 253; L353) entlang der Anschlussfläche des Anschlussabschnitts (153a; 253a; 353a) des zweiten Anschlusses (153; 253; 353) vorhanden sind,
wobei ein kürzester Abstand von einem Schnittpunkt der ersten virtuellen Ebene (L152; L 252; L 352) und der ersten Normalen (Ax152; Ax252; Ax352) zu einem Teil der Außenwand ein erster Abstand ist, und ein kürzester Abstand von einem Schnittpunkt der zweiten virtuellen Ebene (L153; L 253; L353) und der zweiten Normalen (Ax153; Ax253; Ax353) zu dem Teil der Außenwand ein zweiter Abstand ist,
wobei die Referenzebene definiert ist in einer Richtung orthogonal zu einem Schnittpunkt (IL1; IL3; ILA) der ersten virtuellen Ebene (L152; L252; L352) und der zweiten virtuellen Ebene (L153; L253; L 353), in der sich die erste virtuelle Ebene (L152; L 252; L 352) und der zweiten virtuellen Ebene (L153; L 253; L353) schneiden, und
wobei der Anschlussabschnitt (152a; 252a; 352a) des ersten Anschlusses (152; 252; 352) und der Anschlussabschnitt (153a; 253a; 353a) des zweiten Anschlusses (153; 253; 353) so angeordnet sind, dass die erste virtuelle Ebene (L152; L 252; L 352) und die zweite virtuelle Ebene (L153; L 253; L 353) sich in einem stumpfen Winkel schneiden, und wobei, wenn in der Richtung senkrecht zur Referenzebene gesehen, die erste Normale (Ax152; Ax252; Ax352) und die zweite Normale (Ax153; Ax253; Ax353) durch die Werkzeugeinführöffnung (101c; 201c; 301c) verlaufen, und die erste Normale (Ax152; Ax252; Ax352) und die zweite Normale (Ax153; Ax253; Ax353) sich schneiden auf einer gegenüberliegenden Seite der Anordnungspositionen der Anschlussabschnitte (152a-153a; 252a- 253a; 352a-353a) des ersten Anschlusses (152; 252; 352) und des zweiten Anschlusses (153; 253; 353) in Bezug auf eine Position, die die Hälfte eines Abstands des kürzeren der ersten und zweiten Abstände beträgt.

3. Die Anschlussstruktur nach Anspruch 1 oder 2, wobei der Anschlussabschnitt (152a; 252a; 452a) des ersten Anschlusses (152; 252; 452) und der Anschlussabschnitt (153a; 253a; 453a) des zweiten Anschlusses (153; 253; 453) so angeordnet sind, dass die erste Normale (Ax152; Ax252; Ax452) und die zweite Normale (Ax153; Ax253; Ax453) sich außerhalb des Gehäuses (101; 201; 401) schneiden, wenn aus der Richtung senkrecht zur Referenzebene betrachtet.

4. Die Anschlussstruktur nach irgendeinem der vorstehenden Ansprüche, wobei die Vielzahl von Anschlüssen (152-154; 252-254; 352-353) so angeordnet sind, dass die Zwischenräume (G1-G5) zwischen benachbarten Anschlussabschnitten größer als ein Isolationsabstand sind.

5. Die Anschlussstruktur nach irgendeinem der vorstehenden Ansprüche unter Bezugnahme auf Anspruch 2, wobei in einer Richtung orthogonal zu einer Richtung, in der der erste Abstand und der zweite Abstand in der Referenzebene definiert sind, die Werkzeugeinführöffnung (101c; 201c; 301c) so ausgebildet ist, dass eine Öffnungslänge (L1; L21; L31) der Werkzeugeinführöffnung (101c; 201c; 301c) kürzer ist als eine Anordnungslänge (*layout length*) (L4; L7; L8; L24; L34) der Anschlussabschnitte (152a-154a; 252a-254a; 352a-354a) der Vielzahl von Anschlüssen (152-154; 252-254; 352-353).

6. Die Anschlussstruktur nach irgendeinem der vorstehenden Ansprüche unter Bezugnahme auf Anspruch 2,
wobei die elektrische Vorrichtung (100; 160; 170) ein Leistungswandler bzw. Stromrichter ist, der konfiguriert ist, um Gleichstrom- in Wechselstromleistung umzuwandeln,
wobei die externe Vorrichtung ein Dreiphasen-Wechselstrommotor (M) ist, der konfiguriert ist, um sich in Reaktion auf die Zufuhr von dreiphasigem Wechselstrom zu drehen,
wobei die Vielzahl von Anschlüssen (152-154) in einem Stromversorgungskanal (*electric power supply passage*) zum Dreiphasen-Wechselstrommotor (M) angeordnet sind und einen ersten Anschluss (152), einen zweiten Anschluss (153) und einen dritten Anschluss (154) umfassen, von denen ein Anschlussabschnitt (154a) benachbart zum Anschlussabschnitt (153a) des zweiten Anschlusses (153) angeordnet ist,
wobei eine dritte virtuelle Ebene (L154) entlang einer Anschlussfläche des Anschlussabschnitts (154a) des dritten Anschlusses (154) gebildet ist, und eine dritte Normale (Ax154) gebildet ist, die durch ein radiales Zentrum des Durchgangslochs (154b) im Anschlussabschnitt (154a) des dritten Anschlusses (154) verläuft und sich in einer Richtung senkrecht zur Anschlussfläche im Anschlussabschnitt (154a) des dritten Anschlusses (154) erstreckt, und
wobei, wenn ein kürzester Abstand von einem Punkt, an dem die dritte virtuelle Ebene (L154) und die dritte Normale (Ax154) sich schneiden, zu dem Teil der Außenwand ein dritter Abstand ist, der Anschlussabschnitt des dritten Anschlusses (154) so angeordnet ist, dass die zweite virtuelle Ebene (L153) und die dritte virtuelle Ebene (L154) sich in einem stumpfen Winkel schneiden, und wenn aus der Richtung senkrecht zur Referenzebene betrachtet, die zweite Normale (Ax153) und die dritte Normale (Ax154) durch die Werkzeugeinführöffnung (101c) verlaufen, und die zweite Normale (Ax153) und die dritte Normale (Ax154) sich an einer gegenüberliegenden Seite der Anordnungspositionen der Anschlussabschnitte (153a, 154a) des zweiten Anschlusses (153) und des dritten Anschlusses (154) in Bezug auf eine Position schneiden, die die Hälfte eines Abstands des kürzeren von dem zweiten Abstand und dem dritten Abstand beträgt.

7. Die Anschlussstruktur nach Anspruch 6, wobei der Anschlussabschnitt des zweiten Anschlusses (153) und der Anschlussabschnitt des dritten Anschlusses (154) so angeordnet sind, dass sich die zweite Normale (Ax153) und die dritte Normale (Ax154) außerhalb des Gehäuses (101) schneiden, wenn aus der Richtung senkrecht zur Referenzebene betrachtet.

8. Die Anschlussstruktur nach irgendeinem der vorstehenden Ansprüche,
wobei, in einer Ansicht aus einer Richtung senkrecht zur Referenzebene, eine Richtung, die einen Punkt (P4), in dem die erste Normale (Ax352) durch die Werkzeugeinführöffnung (301c) verläuft, und einen Punkt (P5), in dem die zweite Normale (Ax353) durch die Werkzeugeinführöffnung (301c) verläuft, verbindet, eine erste Richtung ist, und wobei eine Richtung senkrecht zur ersten Richtung auf der Referenzebene eine zweite Richtung ist, und
wobei, wenn eine erste imaginäre Linie (L354), die durch ein radiales Zentrum des Durchgangslochs (352b) im Anschlussabschnitt (352a) des ersten Anschlusses (352) verläuft und sich in der zweiten Richtung erstreckt, und eine zweite imaginäre Linie (L355), die durch ein radiales Zentrum des Durchgangslochs (353b) im Anschlussabschnitt (353a) des zweiten Anschlusses (353) und sich in der zweiten Richtung erstreckt, gezeichnet werden, der Punkt (P4), an dem die erste Normale (Ax352) durch die Werkzeugeinführöffnung (301c) verläuft, und der Punkt (P5), an dem die zweite Normale (Ax353) durch die Werkzeugeinführöffnung (301c) verläuft, in einem Bereich zwischen der ersten imaginären Linie (L354) und der zweiten imaginären Linie (L355) in der ersten Richtung angeordnet sind.

9. Die Anschlussstruktur nach einem der zurückweichenden (*receding*) Ansprüche unter Bezugnahme auf Anspruch 6,
wobei der Motor (M) ein Motor zum Antreiben eines Fahrzeugs (V) ist,
wobei der Motor in einem Antriebsraum (R1) des Fahrzeugs (V) montiert ist und ein Motorgehäuse (511, 521) aufweist, das als äußere Zelle bzw. äußere Funktionseinheit bzw. Außengehäuse (*outer cell*) dient,
wobei ein Getriebe (TM) mit einem als Außengehäuse (*outer cell*) dienenden Achsgehäuse (531) benachbart zum Motor im Antriebsraum (R1) montiert ist,
wobei das Gehäuse (101; 201; 301; 401; 402) an mindestens einem von dem Motorgehäuse (511, 521) und dem Achsgehäuse (531) so angeordnet ist, dass die Werkzeugeinführöffnung (101c; 201c; 301c; 401c; 402c) zu einer im Fahrzeug (V) zu erwartenden Stoßbelastungs-Eingangsseite ausgerichtet ist, und
wobei ein Ende des Gehäuses (101; 201; 301; 401; 402) auf der Eingangsseite bündig in der Oberfläche mit dem Motorgehäuse (511, 521) oder dem Achsgehäuse (531) ist oder auf einer der Eingangsseite gegenüberliegenden Seite angeordnet ist.

10. Eine elektrische Vorrichtung (100; 160; 170), die die Anschlussstruktur nach irgendeinem der vorstehenden Ansprüche beinhaltet.

11. Ein Fahrzeug (V), das die elektrische Vorrichtung (100; 160; 170) nach Anspruch 10 beinhaltet.

## Revendications

1. Une structure de bornes d'un appareil électrique (100 ; 160 ; 170), comprenant :
une pluralité de bornes (152-154 ; 252-254 ; 352-353 ; 452-453 ; 462-463) incluant au moins une première borne (152 ; 252 ; 352 ; 452 ; 462) et une deuxième borne (153 ; 253 ; 353 ; 453 ; 463) adjacente à la première borne (152 ; 252 ; 352 ; 452 ; 462), chacune des bornes (152-154 ; 252-254 ; 352-353 ; 452-453 ; 462-463) présentant une partie de connexion (152a-154a ; 252a-254a ; 352a-354a ; 452a-453a ; 462a- 463a) qui est configurée pour être connectée électriquement à un appareil externe et est agencée pour s'étendre depuis un plan de référence prédéterminé dans une direction orthogonale au plan de référence ; et
un boîtier (101 ; 201 ; 301 ; 401 ; 402) logeant la pluralité de bornes (152-154 ; 252-254 ; 352-353 ; 452-453 ; 462-463) et présentant une ouverture d'insertion d'outil (101c ; 201c ; 301c ; 401c ; 402c) dans laquelle un outil pour la connexion électrique de la pluralité de bornes (152-154 ; 252-254 ; 352-353 ; 452-453 ; 462-463) est destiné à être inséré dans une partie d'une paroi extérieure,
sachant que la partie de connexion (152a-154a ; 252a-254a) de chacune de la pluralité de bornes (152-154 ; 252-254 ; 352-353 ; 452-453 ; 462-463) présente une surface de connexion plate et un trou traversant (152b-154b ; 252b-254b) dans lequel est inséré un boulon (BLT) pour la connexion électrique, et
sachant que, lorsqu'on trace une première ligne normale (Ax152 ; Ax252 ; Ax352 ; Ax452 ; Ax462) passant par un centre radial du trou traversant (152b ; 252b ; 352b ; 452b ; 462b) dans la partie de connexion (152a ; 252a ; 352a ; 452a ; 462a) de la première borne (152 ; 252 ; 352 ; 452 ; 462) et s'étendant dans une direction normale à la surface de connexion dans la partie de connexion (152a ; 252a ; 352a ; 452a ; 462a) de la première borne (152 ; 252 ; 352 ; 452 ; 462), et une deuxième ligne normale (Ax153 ; Ax253 ; Ax353 ; Ax453 ; Ax463) passant par un centre radial du trou traversant (153b ; 253b ; 353b ; 453b ; 463b) dans la partie de connexion (153a ; 253a ; 353a ; 453a ; 463a) de la deuxième borne (153 ; 253 ; 353 ; 453 ; 463) et s'étendant dans une direction normale à la surface de connexion dans la partie de connexion (153a ; 253a ; 353a ; 453a ; 463a) de la deuxième borne (153 ; 253 ; 353 ; 453 ; 463), une distance (L11 ; L35 ; L52 ; L42 ; L47) entre un point (P12 ; P22 ; P4 ; P45 ; P56) où la première ligne normale (Ax152 ; Ax252 ; Ax352 ; Ax452 ; Ax462) traverse l'ouverture d'insertion d'outil (101c ; 201c ; 301c ; 401c ; 402c) et un point (P13 ; P23 ; P5 ; P46 ; P55) où la deuxième ligne normale (Ax153 ; Ax253 ; Ax353 ; Ax453 ; Ax463) traverse l'ouverture d'insertion d'outil (101c ; 201c ; 301c ; 401c ; 402c) est plus courte qu'une distance (L7 ; L27 ; L51 ; L43 ; L48) entre une intersection de la surface de connexion et la première ligne normale (Ax152 ; Ax252 ; Ax352 ; Ax452 ; Ax462) dans la partie de connexion (152a ; 252a ; 352a ; 452a ; 462a) de la première borne (152 ; 252 ; 352 ; 452 ; 462) et une intersection de la surface de connexion et de la deuxième ligne normale (Ax153 ; Ax253 ; Ax353 ; Ax453 ; Ax463) dans la partie de connexion (153a ; 253a ; 353a ; 453a ; 463a) de la deuxième borne (153 ; 253 ; 353 ; 453 ; 463), lorsqu'on regarde dans la direction orthogonale au plan de référence.

2. La structure de bornes d'après la revendication 1,
sachant qu'il existe un premier plan virtuel (L152 ; L 252 ; L 352) le long de la surface de connexion de la partie de connexion (152a ; 252a ; 352a) de la première borne (152 ; 252 ; 352) et un deuxième plan virtuel (L153 ; L 253 ; L353) le long de la surface de connexion de la partie de connexion (153a ; 253a ; 353a) de la deuxième borne (153 ; 253 ; 353),
sachant que la distance la plus courte à partir d'une intersection du premier plan virtuel (L152 ; L 252 ; L 352) et de la première ligne normale (Ax152 ; Ax252 ; Ax352) jusqu'à une partie de la paroi extérieure est une première distance, et qu'une distance la plus courte à partir d'une intersection du deuxième plan virtuel (L153 ; L 253 ; L353) et de la deuxième ligne normale (Ax153 ; Ax253 ; Ax353) jusqu'à la partie de la paroi extérieure est une deuxième distance,
sachant que le plan de référence est défini dans une direction orthogonale à une intersection (IL1 ; IL3 ; IL4) du premier plan virtuel (L152 ; L 252 ; L 352) et du deuxième plan virtuel (L153 ; L 253 ; L 353) où le premier plan virtuel (L152 ; L 252 ; L 352) et le deuxième plan virtuel (L153 ; L 253 ; L353) se croisent, et
sachant que la partie de connexion (152a ; 252a ; 352a) de la première borne (152 ; 252 ; 352) et la partie de connexion (153a ; 253a ; 353a) de la deuxième borne (153 ; 253 ; 353) sont disposées de manière que le premier plan virtuel (L152 ; L 252 ; L 352) et le deuxième plan virtuel (L153 ; L 253 ; L 353) se coupent entre eux selon un angle obtus, et que lorsqu'on regarde dans la direction orthogonale au plan de référence, la première ligne normale (Ax152 ; Ax252 ; Ax352) et la deuxième ligne normale (Ax153 ; Ax253 ; Ax353) passent par l'ouverture d'insertion d'outil (101c ; 201c ; 301c), et la première ligne normale (Ax152 ; Ax252 ; Ax352) et la deuxième ligne normale (Ax153 ; Ax253 ; Ax353) se croisent sur un côté opposé des positions d'agencement (*disposed positions*) des parties de connexion (152a-153a ; 252a- 253a ; 352a-353a) de la première borne (152 ; 252 ; 352) et de la deuxième borne (153 ; 253 ; 353) par rapport à une position qui est la moitié de la plus courte des distances première et deuxième.

3. La structure de bornes d'après la revendication 1 ou 2, sachant que la partie de connexion (152a ; 252a ; 452a) de la première borne (152 ; 252 ; 452) et la partie de connexion (153a ; 253a ; 453a) de la deuxième borne (153 ; 253 ; 453) sont disposées de manière que la première ligne normale (Ax152 ; Ax252 ; Ax452) et la deuxième ligne normale (Ax153 ; Ax253 ; Ax453) se croisent à l'extérieur du boîtier (101 ; 201 ; 401), lorsqu'on regarde depuis la direction orthogonale au plan de référence.

4. La structure de bornes d'après l'une quelconque des revendications précédentes, sachant que la pluralité de bornes (152-154 ; 252-254 ; 352-353) sont disposées de manière que des espacements (G1-G5) entre des parties de connexion adjacentes sont supérieurs à une distance d'isolation.

5. La structure de bornes d'après l'une quelconque des revendications précédentes se référant à la revendication 2, sachant que, dans une direction orthogonale à une direction dans laquelle la première distance et la deuxième distance sont définies dans le plan de référence, l'ouverture d'insertion d'outil (101c ; 201c ; 301c) est formée de manière qu'une longueur d'ouverture (L1 ; L21 ; L31) de l'ouverture d'insertion d'outil (101c ; 201c ; 301c) soit plus courte qu'une longueur de disposition (*layout length*) (L4 ; L7 ; L8 ; L24 ; L34) des parties de connexion (152a-154a ; 252a-254a ; 352a-354a) de la pluralité de bornes (152-154 ; 252-254 ; 352-353).

6. La structure de bornes d'après l'une quelconque des revendications précédentes se référant à la revendication 2,
sachant que l'appareil électrique (100 ; 160 ; 170) est un convertisseur de puissance configuré pour convertir une puissance en courant continu en une puissance en courant alternatif,
sachant que l'appareil externe est un moteur à courant alternatif triphasé (M) configuré pour tourner en réponse à une alimentation en puissance en courant alternatif triphasé,
sachant que la pluralité de bornes (152-154) est disposée dans un passage d'alimentation électrique vers le moteur à courant alternatif triphasé (M), et comprend la première borne (152), la deuxième borne (153) et une troisième borne (154) dont une partie de connexion (154a) est disposée de manière adjacente à la partie de connexion (153a) de la deuxième borne (153),
sachant qu'un troisième plan virtuel (L154) est formé le long d'une surface de connexion de la partie de connexion (154a) de la troisième borne (154) et qu'une troisième ligne normale (Ax154) est formée en passant par un centre radial du trou traversant (154b) dans la partie de connexion (154a) de la troisième borne (154) et s'étend dans une direction normale à la surface de connexion dans la partie de connexion (154a) de la troisième borne (154), et
sachant que, lorsqu'une distance la plus courte à partir d'un point où le troisième plan virtuel (L154) et la troisième ligne normale (Ax154) se croisent jusqu'à la partie de la paroi extérieure est une troisième distance, la partie de connexion de la troisième borne (154) est disposée de manière que le deuxième plan virtuel (L153) et le troisième plan virtuel (L154) se croisent entre eux selon un angle obtus, et que lorsqu'on regarde depuis la direction orthogonale au plan de référence, la deuxième ligne normale (Ax153) et la troisième ligne normale (Ax154) passent par l'ouverture d'insertion d'outil (101c), et la deuxième ligne normale (Ax153) et la troisième ligne normale (Ax154) se croisent entre elles sur un côté opposé des positions d'agencement des parties de connexion (153a, 154a) de la deuxième borne (153) et de la troisième borne (154) par rapport à une position qui est la moitié de la plus courte des distances deuxième et troisième.

7. La structure de bornes d'après la revendication 6, sachant que la partie de connexion de la deuxième borne (153) et la partie de connexion de la troisième borne (154) sont disposées de manière que la deuxième ligne normale (Ax153) et la troisième ligne normale (Ax154) se croisent à l'extérieur du boîtier (101), lorsqu'on regarde dans la direction orthogonale au plan de référence.

8. La structure de bornes d'après l'une quelconque des revendications précédentes,
sachant que, lorsqu'on regarde depuis une direction orthogonale au plan de référence, une direction reliant un point (P4) où la première ligne normale (Ax352) traverse l'ouverture d'insertion d'outil (301c) et un point (P5) où la deuxième ligne normale (Ax353) traverse l'ouverture d'insertion d'outil (301c) est une première direction, et qu'une direction orthogonale à la première direction sur le plan de référence est une deuxième direction, et
sachant que, lorsqu'on trace une première ligne imaginaire (L354) passant par un centre radial du trou traversant (352b) dans la partie de connexion (352a) de la première borne (352) et s'étendant dans la deuxième direction, et une deuxième ligne imaginaire (L355) passant par un centre radial du trou traversant (353b) dans la partie de connexion (353a) de la deuxième borne (353) et s'étendant dans la deuxième direction, le point (P4) où la première ligne normale (Ax352) traverse l'ouverture d'insertion d'outil (301c) et le point (P5) où la deuxième ligne normale (Ax353) traverse l'ouverture d'insertion d'outil (301c) sont positionnés dans une zone entre la première ligne imaginaire (L354) et la deuxième ligne imaginaire (L355) dans la première direction.

9. La structure terminale d'une quelconque des revendications en recul (*receding*) se référant à la revendication 6,
sachant que le moteur (M) est un moteur destiné à propulser un véhicule (V), le moteur étant monté dans un compartiment de chaîne cinématique (R1) du véhicule (V) et présentant un carter de moteur (511, 521) servant de boîtier ou encore de cellule externe (*outer cell*)*,*
sachant qu'une transmission (TM) présentant un carter d'essieu (531) servant de cellule externe est montée à proximité du moteur dans le compartiment de chaîne cinématique (R1),
sachant que le boîtier (101 ; 201 ; 301 ; 401 ; 402) est disposé sur au moins l'un parmi le boîtier de moteur (511, 521) et le boîtier d'essieu (531) de manière que l'ouverture d'insertion d'outil (101c ; 201c ; 301c ; 401c ; 402c) soit orientée vers un côté d'entrée d'une charge d'impact attendue dans le véhicule (V), et
sachant qu'une extrémité du boîtier (101 ; 201 ; 301 ; 401 ; 402) sur le côté d'entrée est affleurante dans la surface avec le boîtier de moteur (511, 521) ou le boîtier d'essieu (531), ou est située sur un côté opposé au côté d'entrée.

10. Un appareil électrique (100 ; 160 ; 170) incluant la structure de bornes d'après l'une quelconque des revendications précédentes.

11. Un véhicule (V) incluant l'appareil électrique (100 ; 160 ; 170) d'après la revendication 10.
